# EUROPÄISCHE PATENTSCHRIFT

(11) **EP 1 745 901 B1**
(45) Veröffentlichungstag und Bekanntmachung des Hinweises auf die Patenterteilung: **06.09.2017**
(21) Anmeldenummer: 06015130.5
(22) Anmeldetag: 20.07.2006
(51) Int. Cl.: B28B 11/04, C04B 26/12, C04B 26/32, C04B 28/24, C04B 28/26, C04B 30/02, E04B 2/16

(54) **Verfahren und Vorrichtung zur Herstellung eines Formsteins**
Method and device for producing a moulded brick
Procédé et dispositif pour la fabrication d'une brique moulée

(30) Priorität: 20.07.2006 DE 102006034073; 21.07.2005 DE 102005034807
(43) Veröffentlichungstag der Anmeldung: 24.01.2007
(60) Teilanmeldung: 17179333.4
(73) Patentinhaber: Rockwool International A/S, 2640 Hedehusene (DK)
(72) Erfinder: Klose, Gerd-Rüdiger, 46286 Dorsten (DE); Paulitschke, Wener, 41564 Kaarst (DE); Pieper Dipl.-Ing., Herbert, 48249 Dülmen (DE)
(74) Vertreter: Rausch.Wanischeck.Brinkmann.Intellectual Property

(56) Entgegenhaltungen:
- WO-A-90/11419
- DE-A1- 2 532 873
- DE-A1- 3 122 087
- DE-A1- 4 432 387

## Beschreibung

Die Erfindung betrifft ein Verfahren zur Herstellung eines Formsteins, beispielsweise eines Mauersteins, insbesondere eines Ziegels mit einem vorzugsweise im wesentlichen quaderförmigen Körper, der zwei im wesentlichen parallel und im Abstand zueinander ausgerichtete große Oberflächen und im wesentlichen hierzu rechtwinklig verlaufende Seitenflächen sowie im wesentlichen parallel zu den Seitenflächen und im wesentlichen rechtwinklig zu den großen Oberflächen verlaufende Kanäle aufweist, in die zumindest teilweise eine Füllung aus einem Dämmstoffmaterial eingebracht wird.

Die Erfindung betrifft ferner eine Vorrichtung zur Durchführung des Verfahrens.

Gebäude weisen Außen- und innere Trennwände auf. Diese Wände trennen beheizte von nicht beheizten Räumen. In der Regel treten Transmissionswärmeverluste über die Außenwände auf, die als multifunktionelle Bauteile einen wesentlichen Bestandteil der Tragkonstruktion darstellen und daher eine ausreichende Druckfestigkeit aufweisen müssen. Da Außenwände das Gebäudeinnere von der äußeren Umgebung und damit von den Auswirkungen der Atmosphärilien trennen und Transmissionswärmeverluste begrenzt werden müssen, ist es üblich, die Außenwände mit einer Wärmedämmung auszubilden. Ferner sollen Außenwände eine möglichst hohe Schalldämmung bewirken, um sowohl Außenlärm gegenüber den Innenräumen abzumindern als auch Schallemissionen nach außen zu verringern.

Es wird zwischen Luftschalldämmung und Körperschalldämmung unterschieden. Luftschall wird beispielsweise durch das Sprechen, Körperschall durch die direkte Anregung der Wand, z. B. durch Betätigung ein- oder angebauter Armaturen, Klopfen oder dergleichen erzeugt. Als Schalldämmmaß wird das logarithmische Verhältnis der auf eine Wand auftreffenden Schallenergie zu der durchgelassenen Energie bezeichnet. Das Schalldämmmaß steigt bei einschaligen homogenen Wänden mit dem Flächengewicht, der Zusammenhang wird als Berg'sches Gesetz bezeichnet. Bei porigen oder vielkammerigen Wänden sind die erreichbaren Schalldämmungsmaße von vielen Faktoren abhängig. Generell sollen in diesen Wänden vorhandene Hohlräume klein sein, damit deren Begrenzungsflächen nicht bereits durch geringe Schallenergie zum Schwingen angeregt werden. Wenn die Bauteile der Wand in Resonanzschwingungen geraten, führt das regelmäßig in einem bestimmten Frequenzbereich zu einer deutlichen Abminderung des Schalldämmmaßes.

Als weitere wesentliche Anforderung müssen Außenwände einen Schutz gegen Brandangriffe von außen und gegen eine Brandweiterleitung nach außen bilden. Wände werden beispielsweise aus Formsteinen, beispielsweise aus Ziegeln hergestellt, die aus Ton, Lehm oder einer tonigen Masse bestehen und seit langer Zeit bewährte Baustoffe für Außenwände darstellen. Es werden luftgetrocknete Ziegel und gebrannte Ziegel unterschieden.

Die Formgebung der für die Ziegelherstellung verwendeten plastischen und somit büdsamen tonmineralhaitigen Massen erfolgt mit Hilfe von kontinuierlich arbeitenden Strangpressen. Ein endloser Massenstrom wird unter Berücksichtigung von Trocken- und Brennschwindung entsprechend der Höhe des gebrannten Ziegels als Formlinge von der Masse mit Hilfe eines dünnen Drahtes abgelängt. Nach dem Trocknen der Formlinge werden diese gebrannt. Durch das Erhitzen wird den Tonmineralien das chemisch gebundene Wasser ausgetrieben, so daß feinporöse Ziegel entstehen, die druckfest und in Wasser unlöslich sind.

Die Ziegel bestehen aus einem gebrannten Scherben, der porös und kapillaraktiv ist und eine Wasserdampf-Diffusionswiderstandszahl p von ca. 10 aufweist, die im feuchten Zustand auf µ = 5 abfällt. Es wird eine Porengröße bzw. Porengrößenverteilung angestrebt, die den Scherben frostbeständig macht. In die Ziegel bzw. daraus hergestellte Wände eindringende Feuchte kann sich gut in diesen verteilen und leicht abdiffundieren, wobei der gebrannte Scherben weitgehend unverändert bleibt. Genormte Ziegel weisen bei Rohdichten zwischen 1.200 und 2.000 kg/m3 hohe Druckbeständigkeiten, aber mit 0,50 bis 0,81 W/ (m×K) auch hohe Wärmeleitfähigkeiten auf. Der Wärmedurchlaßwiderstand einer beidseitig unverputzten 24 cm dicken Wand aus Ziegeln mit einer Rohdichte von 1.600 kg/m3, die in einem üblichen Zement-Kalk-Mörtel verlegt sind, beträgt nur ca. 0,35 (m²×K)/W. Diese Wand weist einen Wärmedurchgangskoeffizienten U von ca. 2 W/ (m²×K) auf. Wegen des hohen Flächengewichts ist das Schalldämmmaß allerdings hoch. Um den Wärmedurchgangskoeffizienten U von derartigen Außenwänden auf einen als angemessen angesehenen Wert von = 0,3 W/(m²×K) zu reduzieren, wird eine aus diesen Ziegeln hergestellte Wand an ihrer Außenseite mit Wärmedämmstoffen verkleidet. Beispielsweise können die Wärmedämmstoffe als hinterlüftete Bekleidungen oder mit direkt auf den Dämmschichten aufgetragenen Putzschichten in Form sogenannter Wärmedämm-Verbundsysteme ausgebildet sein.

Bei Neubauten werden zumeist schlanke Wandschalen aus hochfesten und deshalb hoch wärmeleitenden Baustoffen wie Beton, Kalksand-Vollsteinen, Voll- oder Hochlochziegeln erstellt und auf die geschilderte Weise gedämmt. Bei diesen Konstruktionen können die Anforderungen an den Wärme-, Schall- und Brandschutz mit verschiedenartigen optischen Anmutungen kombiniert werden. Die massiven Wandschalen sind zudem gute Wärmespeicher und tragen zur Vergleichmäßigung des Innenraumklimas bei. In den Wandschalen können von den Nutzern der Gebäude Befestigungsmittel, beispielsweise mit Hilfe von Dübeln, leicht verankert werden.

Eine Reduzierung des Gewichts und damit auch des spezifischen Energieeinsatzes bei der Herstellung der Ziegel wird durch die Ausbildung von Hochlöchern in dem Formstein erreicht. Die Hochlöcher sind rechtwinklig zu Lagerflächen angeordnet. Als Lagerfläche ist das Produkt aus Länge x Breite des Formkörpers definiert. Neben Formsteinen in Form von Ziegeln trifft dies auch auf diskontinuierlich in Formen gepreßten Kalksand-, Beton- oder Hüttensteinen zu. In Bezug auf die Größe des Wärmedurchgangskoeffizienten wirken sich diese Hochlöcher durch ihren geringen Volumenanteil und die hohe Wärmeleitfähigkeit des Formsteins nur in geringem Maße aus. Bei als Leichthochlochziegel bezeichneten Formsteinen wird die auf = 1.000 kg/m3 begrenzte Rohdichte zum einen durch eine verringerte Rohdichte des strukturbildenden keramischen Scherbens und zum anderen durch einen hohen Anteil Hochlöcher von über 50 % in Bezug auf die jeweilige Lagerfläche erreicht. Die Reduktion der Rohdichte des keramischen Scherbens erfolgt durch ein Ausbrennen von darin verteilt angeordneten feinen Partikeln.

Großformatige und/oder schwere Formsteine weisen ferner Grifflöcher auf, welche die Handhabung insbesondere des Setzten der Formsteine erleichtern.

Hochziegel, wie auch Leichthochlochziegel weisen bestimmte Lochbilder auf, die als Lochung A, B oder C bezeichnet werden. Der Lochanteil darf bei Ziegeln mit Grifflöchern 55 % betragen. Die Durchmesser der kreisförmigen, ellipsenförmigen oder rhombischen Löcher sind festgelegt. Leichthochlochziegel sind Ziegel mit einer Lochung B und haben eine Höhe von 238 mm, welche zusätzliche Anforderungen u. a. hinsichtlich der Lochreihenzahl erfüllen müssen.

Zwischen den in Lochreihen angeordneten Löchern sind Stege angeordnet, die eine bestimmte Stegdicke aufweisen. Die Summe der Stegdicken rechtwinklig zur Wanddicke bzw. bezogen auf die Länge des Ziegels muß = 250 mm/m sein. Die Stege können versetzt zueinander angeordnet sein.

Mit Rohdichten = 1.000 kg/m3 werden möglichst großformatige filigrane keramische Formsteine hergestellt, deren niedrigste Wärmeleitfähigkeiten ca. 0,24 W/ (m×K) betragen. Diese Formsteine werden mit Leichtmörteln LM 21 oder LM 36 im Verband verlegt. Beim Auftrag des Leichtmörtels auf die obere Lagerfläche des Formsteins kann natürlich Leichtmörtel in die Löcher hineinfallen oder sich in die Löcher erstrecken. Die Formsteine werden mit ihren Stirnflächen dicht aneinanderliegend angeordnet, so daß zwischen den Formsteinen bestehende Stoßfugen unvermörtelt bleiben. Das ist möglich, wenn beide Stirnflächen der Formsteine Zähne und Ausnehmungen aufweisen, die so angeordnet sind, daß diese beim Zusammensetzen der Formsteine ineinander greifen und somit verspringende Stoßfugen bilden. Diese Zähne und Ausnehmungen werden nicht nachbearbeitet, so daß die Stoßfugen wegen der unvermeidbaren Maßtoleranzen nicht geschlossen, sondern zumindest partiell offen sind. Hieraus ergeben sich Wärmebrücken. Wesentlich nachteiliger ist aber die Wirkung der teilweise offenen Stoßfugen hinsichtlich einer Schalldurchleitung. Relative Bewegungen der Formsteine im Bereich der offenen Stoßfugen können ferner zu Rissen in einer einseitig oder beidseitig aufgetragenen Putzschichten führen.

Zur Verbindung voranstehend beschriebener Formsteine, insbesondere Ziegel, werden Dünnbettmörtel verwendet, bei denen es sich um Mörtel mit Zement und Sand bis 1 mm Korngröße sowie Zusatzmitteln und Zusatzstoffen handelt, die u. a. das Wasserrückhaltevermögen des Dünnbettmörtels erhöhen, damit dem Zement nicht das für die Hydratation erforderliche Wasser durch die Umgebung entzogen wird. Für die Verwendung von Dünnbettmörteln müssen die Lagerflächen der Ziegel glatt und plan parallel zueinander verlaufend geschliffen werden, so daß Dickentoleranzen auf < 1 mm reduziert werden und gleichzeitig entsprechend ebene Lagerflächen entstehen. Diese handelsüblich Planziegel genannten Formsteine können mit der unteren Lagerfläche und einer Stirnfläche in die Dünnbettmörtelschicht getaucht werden und nehmen dabei in Abhängigkeit von der Zeit eine bestimmte Menge Dünnbettmörtel auf, der wegen seiner begrenzten inneren Kohäsion nur in einer dünnen Schicht anhaftet. Die Ziegel werden anschließend im Verband auf- und nebeneinander gesetzt. Der Abstand benachbart angeordneter Ziegel und damit die Fugendicke bleibt bei dieser Verarbeitung auf 1 bis 3 mm beschränkt, so daß der Mörtel nur an den Stegen der Ziegel haftet. Die Wärmebrückenwirkung der Dünnbettmörtelschicht ist trotz der relativ hohen Wärmeleitfähigkeit des Dünnbettmörtels gering. Der Dünnbettmörtel kann auch durch Aufziehen mit Hilfe einer Vorrichtung auf die oberen Lagerflächen einer Reihe nebeneinander angeordneter Ziegel appliziert werden.

Die Hochlöcher in den Ziegeln werden durch das Abdecken mit einer Mörtelschicht zu abgeschlossenen Kammern.

Die dünnen, porosierten Stege der Leichthochlochziegel lassen sich durch Schallwellen anregen, wobei die Löcher bzw. die im Mauerwerk geschlossenen Kammern der Ziegel den Charakter von Resonanzkörpern annehmen. Aus brennwie auch aus verarbeitungstechnischen Gründen sowie wegen der erforderlichen Festigkeit der aus den Ziegeln zu erstellenden Wände sind die Leichthochlochziegel in ihren horizontalen Querschnitten symmetrisch ausgebildet. Schalltechnisch nachteilig wirken sich ferner unvermörtelte und deshalb luftdurchlässige Stoßfugen aus. Dies trifft auch zu, wenn beide Wandflächen mit Putzschichten abgedeckt sind. Die Schalldämmmaße von Wänden, die aus Leichthochlochziegeln bestehen, sind häufig zu niedrig. In Bezug auf eine Schalllängsleitung können sich Unterbrechungen an den Stoßfugen auch wiederum günstig auswirken.

Einen diese Nachteile vermeidende Hochlochziegel mit einer großen Anzahl von Kanälen beschreibt die DE 100 34 342 A1. Dieser Hochlochziegel hat eine erhöhte Scherbendichte von zumindest > ca. 1.400 kg/m3 sowie eine übliche Stoßfugenverzahnung, wobei Reihen von kleinen rechteckigen Langlöchern mit im Vergleich dazu größeren Löchern abwechselnd angeordnet sind. Die Langlöcher sind quer zur Hauptwärmestromrichtung der aus diesen Hochlochziegeln hergestellten Wände oder in Bezug auf den Hochlochziegel in Richtung der Stoßfugenverzahnung ausgerichtet. Anstelle von rechteckigen Löchern können auch Löcher mit quadratischem, elliptischem bis kreisförmigem Querschnitt vorgesehen sein.

Bei einem Lochanteil in Bezug auf die Lagerfläche von > 50 % soll die Rohdichte des Hochlochziegels > 600 kg/m3 betragen. In mindestens eine der größeren Lochkammern soll ein Formkörper aus Dämmmaterial angeordnet werden, der geringfügig kleiner als die Abmessungen des ihn aufnehmenden Loches ist. Das erleichtert naturgemäß das Hereinschieben von harten, inkompressiblen oder selbst wenig steifen Dämmstoffen. Um ein Herausfallen des Formkörpers bei der Handhabung oder beim Transport des Hochlochziegels zu vermeiden, weisen die Löcher scharfe Kanten, Spitzen, vorzugsweise dreieckförmige Leisten oder hakenförmige Vorsprünge auf. Diese Vorsprünge dienen als Haltevorrichtungen und sind vorzugsweise einander gegenüberliegend angeordnet, um überhaupt wirksam werden zu können. Weiterhin weist eine mit Leichtmörtel aus den vorbekannten Hochlochziegeln aufgemauerte Wand von 36,5 cm Dicke eine nur unzureichende Wärmeleitfähigkeit auf.

Der Hochlochziegel wird im Herstellerwerk mit den Formkörper bestückt, wobei als Dämmstoff Mineralwolle oder Kunststoff, beispielsweise Polystyrol verwendet wird. Die Formkörper werden mit den der zur Aufnahme bestimmten Löchern entsprechender Abmessung ausgebildet und können etwas kleiner als der Querschnitt der Löcher ausgeführt sein, um ein leichteres Einführen zu ermöglichen, wobei der Eingriff der auskragenden Kanten der Ausformungen in die eingesteckten Formkörper aber noch gewährleistet ist. Beim Einsteckvorgang wird der Formkörper mit Druck in Richtung seiner Längsachse in das Loch geschoben.

Ferner sind aus der DE 41 01 125 A1 schalldämmende Ziegel bekannt, die eine labyrinthartige Querstruktur mit vorzugsweise Stegen umfassen, die Leisten, Vertiefungen, Noppen, Löcher oder dergleichen aufweisen und einen formschlüssigen Verbund mit in Kanälen angeordneten Füllmaterialien wie Beton ermöglichen sollen. Als Füllmaterialien werden ferner Dämmstoffe, vorzugsweise aus schaumigem Material zur Wärmedämmung und/oder aus faserigem Material, wie Mineralfasern, zur Erhöhung der Luftschalldämmung der Ziegel genannt.

Die Formgebung der Hohlräume und der Rauhigkeit der die Kanäle begrenzenden Stege verhindern das Einbringen von Formkörpern bzw. machen es vollkommen unwirtschaftlich.

Aus der DE 102 17 548 A1 ist eine Vorrichtung zum Einbringen von Füllkörpern in Kanäle eines Lochziegels bekannt. Diese Vorrichtung besteht aus zwei blechförmigen Körpern, die getrennt voneinander in eine Bewegungsrichtung bewegbar sind und zwischen denen der Füllkörper angeordnet und komprimiert werden kann. Bei dieser vorbekannten Vorrichtung wird der Füllkörper aus Mineralwolle in einem ersten Schritt zwischen den beiden blechförmigen Körpern angeordnet und anschließend komprimiert, woraufhin beide blechförmige Körper gemeinsam in einen Kanal eines Lochziegels eingeschoben werden. Nach Erreichen der Endstellung wird ein erster blechförmiger Körper aus dem Kanal herausgezogen, so daß eine große Oberfläche des Formkörpers aus Mineralwolle zur Anlage mit einer Innenfläche des Kanals des Lochziegels kommt. Die hierbei auftretende Haftreibung soll ausreichend sein, so daß anschließend der zweite blechförmige Körper ebenfalls aus dem Kanal des Lochziegels herausgezogen werden kann. Bei dieser Vorrichtung bzw. bei dem damit verbundenen Verfahren ist es erforderlich, daß der Formkörper aus Mineralwolle einen großen inneren Zusammenhalt aufweist, wozu es in der Regel eines hohen Bindemittelgehaltes bedarf, der aber die Anforderungen an die Brandbeständigkeit eines derartigen Formkörpers aus Mineralwolle nicht erfüllt. Weist der Formkörper aus Mineralwolle einen zu geringen Bindemittelgehalt auf, so besteht das Problem, daß beim Herausziehen des zweiten blechförmigen Körpers Teile des an der Innenwand des Kanals des Lochziegels anhaftenden Formkörpers durch den zweiten blechförmigen Körper herausgerissen werden.

Aus dem voranstehend dargestellten Stand der Technik ist es bereits bekannt, Dämmstoffe aus Mineralfasern in die Kanäle eines Ziegels einzubringen. Diese Dämmstoffe bestehen aus glasig erstarrten Mineralfasern mit mittleren Durchmessern von ca. 2 - 6 µm. Die Mineralfasern sind biolöslich. Handelsüblich werden Glaswolle- und Steinwolle-Dämmstoffe unterschieden. Aufgrund der hohen Gehalte von Alkalien und Boroxiden schmelzen die Glaswolle-Dämmstoffe bereits bei knapp über 650°C, während Steinwolle-Dämmstoffe einen Schmelzpunkt > 1.000°C nach DIN 4102 Teil 17 aufweisen. Die Dämmstoffe werden gewöhnlich mit Mischungen aus duroplastisch aushärtenden Phenol- und Formaldehyd-Harnstoffharzen verbunden. Durch Zusätze von Mineralölen, Silikonölen und -harzen sind die aus den Mineralfasern hergestellten Dämmstoffe nahezu vollständig wasserabweisend ausgerüstet.

Zur Herstellung von Glaswolle-Dämmstoffen werden Schmelzen verwendet, die vollständig in Mineralfasern umgewandelt werden können. Die mit Binde- und Zusatzmitteln imprägnierten Mineralfasern werden unterhalb eines Fallschachts als Mineralfaserbahn auf einem langsam laufenden luftdurchlässigen Förderband ausgesammelt. Dabei liegen die in sich glatten Mineralfasern flach, wenn auch regellos gerichtet übereinander. Die aus den Mineralfasern gebildete Faserbahn weist große Oberflächen und Seitenflächen auf und wird leicht in vertikaler Richtung gestaucht, wobei ihre Struktur anschließend durch ein Aushärten der Bindemittel fixiert wird.

Durch die flache Lagerung der Mineralfasern rechtwinklig zu den großen Oberflächen ist der Wärmestrom in Richtung der großen Oberfläche deutlich geringer als in Richtung der Seitenflächen, also parallel zu den Mineralfasern. Die Wärmeleitfähigkeiten können sich um bis zu ca. 0,003 W/(m×K) unterscheiden, so daß die Dämmstoffe bei normaler Anordnung mit einer Ausrichtung der großen Oberflächen quer zum Hauptwärmestrom regelmäßig in die Wärmeleitfähigkeitsgruppe 035 nach DIN 4108 und mit der Anordnung der Mineralfasern parallel dazu in die nächst höhere Wärmeleitfähigkeitsgruppe 040 eingestellt werden.

Handelsübliche Glaswolle-Dämmstoffe weisen eine Rohdichte zwischen ca. 12 bis ca. 17 kg/m3 Wärmeleitfähigkeitsgruppe 040 nach DIN 4108 oder > 20 kg/m3 Wärmeleitfähigkeitsgruppe 035 auf. Voranstehend beschriebene Glaswolle-Dämmstoffe weisen Bindemittelgehalte mit ca. 4,5 bis ca. 8 Masse-% auf. Die Zugfestigkeit dieser Dämmstoffe ist parallel zu den großen Oberflächen und damit zu der flachen Lagerung der Mineralfasern relativ hoch, zumindest deutlich höher als quer dazu.

Leichte Dämmstoffe aus Glaswolle delaminieren bereits aufgrund der Eigenspannungen in der Dämmstoffstruktur. Eine mangelnde Querzugfestigkeit reduziert ferner auch die Steifigkeit von aus Mineralfaserbahn hergestellten Dämmkörpern parallel zu deren großen Oberflächen. Die Höhe der Steifigkeit ist zudem noch von dem Querschnitt der Dämmkörper abhängig. Schmale und dünne Dämmkörper, die beispielsweise als Formkörper zur Befüllung von Kanälen im Ziegel verwendet werden sollen, knicken entweder weg oder wölben sich auf, wenn eine Last und/oder eine Stützhöhe zu groß sind. Derartige Dämmkörper lassen sich nicht ohne Weiteres, d. h. ohne zusätzliche Vorrichtungen und nur mit gegenüber den Kanälen geringeren Abmessungen in die Kanäle einstecken. Bei einer engen Lochung im Ziegel ist ferner ein mehrmaliges Nachfassen des Dämmkörpers erforderlich, der den Zeitaufwand erheblich vergrößert und die Stabilität des Dämmkörpers mindert.

Im Unterschied zu Glaswolle-Dämmstoffen bestehen Steinwolle-Dämmstoffe aus Steinwolle-Mineralfasern, die auf unterschiedlichen Zerfaserungsvorrichtungen hergestellt werden können. Es sind Dämmstoffe aus Steinwolle-Mineralfasern auf dem Markt, die mit den bei der Herstellung von Glaswolle-Dämmstoffen üblichen Vorrichtungen und Verfahrenstechniken hergestellt werden. Die Struktur dieser Dämmstoffe aus Steinwolle-Mineralfasern ist somit ähnlich der Struktur der Glaswolle-Dämstoffe, wenngleich die Bindemittelgehalte bei Dämmstoffen aus Steinwolle-Mineralfasern weniger als ca. 5,5 Masse-% betragen und die Dämmstoffe aus Steinwolle-Mineralfasern regelmäßig ca. 25 bis 35 Masse-% nichtfaserige Bestandteile in verschiedenen Formen und Größen enthalten. Die mittelgroßen bis gröberen nichtfaserigen Bestandteile sind nicht über Bindemittel eingebunden. Sie sind zumeist aufgrund ihrer Formen oder aufgrund von Verfaltungen in der Mineralfaserbahn verankert.

Die weitaus überwiegende Menge an Steinwolle-Dämmstoffen wird mit Hilfe von Kaskaden-Zerfaserungsmaschinen hergestellt. Am Ende einer sogenannten Sammelkammer wird eine dünne endlose, mit unausgehärteten, feuchten Binde- und Zusatzmitteln imprägnierte Mineralfaserbahn gebildet. Diese Mineralfaserbahn wird als Primärvlies bezeichnet und mit Hilfe einer pendelnden Vorrichtung quer auf eine langsamer laufende zweite Fördereinrichtung, somit einander überlappend in Mäandern abgelegt. Diese zweite aus mehreren Einzellagen gebildete Mineralfaserbahn wird als Sekundärvlies bezeichnet und sowohl in vertikaler wie auch leicht in horizontaler Richtung gestaucht, bevor die Struktur der Mineralfaserbahn wiederum durch Erhitzen und Aushärten des Bindemittels in einem Härteofen fixiert wird. Da bereits das Primärvlies aus flockenartigen Gebilden besteht, deren Hauptausrichtung nunmehr quer bzw. schräg zu der Förderrichtung der zweiten Fördereinrichtung orientiert ist, ergibt sich selbst ohne eine horizontale Stauchung des Sekundärvlieses eine deutlich höhere Querzugfestigkeit rechtwinklig zu den großen Oberflächen als bei den Glaswolle-Dämmstoffen und ähnlich strukturierten Steinwolle-Dämmstoffen, wie sie voranstehend beschrieben werden. Die horizontale Stauchung des Sekundärvlieses führt zu einer Verfaltung der Mineralfasern. Dabei ist die Zug- und Druckfestigkeit in Richtung der Faltungsachsen deutlich höher als in Faltungs- bzw. Förderrichtung.

Übliche Steinwolle-Dämmstoffe weisen Rohdichten zwischen ca. 27 kg/m3 und ca. 150 kg/m3 und ca. 2 bis 4,5 Masse-% organische Bindemittel, die auch mit Polysacchariden modifiziert sein können, auf. Wenn der absolute Bindemittelanteil allein auf die Masse der Mineralfasern bezogen wird, steigt der prozentuale Anteil dementsprechend.

Die großen Oberflächen aller kontinuierlich hergestellten Mineralfaser-Dämmstoffe sind durch Erhebungen gekennzeichnet, die durch das Einpressen der mit Bindemitteln imprägnierten Mineralfaserbahn in Lochungen von im Härteofen angeordneten Förderständen entstehen. Diese Erhebungen werden bei höheren Rohdichten und höheren Bindemittelanteilen schärfer ausgeprägt.

Aus der EP 0 741 827 B1 ist ein Verfahren zur Herstellung von Steinwolle-Dämmplatten bekannt, bei dem eine Mineralfaserbahn in Mäander aufgefaltet wird. Die Mäander werden anschließend zusammengedrückt und quer zur Förderrichtung auf einer zweite Fördereinrichtung abgelegt. Diese Dämmstoff-Platten weisen durch die Bildung stegartiger Verdichtungen quer zur Förderrichtung deutlich höhere Druckfestigkeiten und Steifigkeiten auf als in Förderrichtung. Durch die Umlenkungen der Mineralfaserbahn entstehen unterhalb der großen Oberflächen Zonen, in denen Mineralwollfasern flach oder in flachem Winkel zu den großen Oberflächen angeordnet sind. Diese Zonen sind quer zu den großen Oberflächen relativ kompressibel. Die Dämmstoff-Platten weisen im Allgemeinen Rohdichten im Bereich von ca. 55 bis ca. 120 kg/m3 auf. Dämmstoff-Platten mit geringen Rohdichten können auf Trägerschichten aufgeklebt und beispielsweise zur Dämmung von Rohrleitungen, runden Behältern oder dergleichen verwendet werden.

Der Verbund der Mineralfasern einer Mineralfaserbahn oder einer Dämmstoff-Platte kann durch Zerschlagen, beispielsweise mit Hammer-Mühlen, Zerreißen und/oder Zerreiben weitgehend aufgelöst werden. Dabei zerbrechen naturgemäß auch viele Mineralfasern. Durch Absieben lassen sich unterschiedlich große Flocken gewinnen. Die Rohdichte des Ausgangsmaterials bestimmt mit die Dichte der Flocken und deren Schüttgewichte. Die Flocken weisen wegen der Form und der Orientierung der Mineralfasern zusammen mit dem nicht restlos aufgelösten Verbund über die Bindemittel ein weichfederndes Verhalten auf. Sie sind nicht rieselfähig, sondern weisen auch in losen Schüttungen steile Böschungswinkel auf. Handelsüblich werden derartige Flocken als Granulat bezeichnet.

Diese Granulate aus Mineralfasern werden in Foliensäcke eingefüllt und verdichtet. Sie können auf ebene oder geneigte offene Flächen ausgeschüttet und beispielsweise mit Harken verteilt werden, wobei dadurch eine Auflockerung erfolgt.

Zumeist werden zur Verteilung der Granulate Fördermaschinen verwendet, mit deren Hilfe das Granulat von einem zentralen Lagerort zur Einbaustelle transportiert wird. Das verdichtete Granulat wird zunächst mit Hilfe von in der Fördermaschine angeordneten rotierenden Armen aufgelockert und über eine Dosiereinrichtung in einem gleichmäßigen Massenstrom aus Mineralfasern in einen Schlauch mit einer endseitig angeordneten Auslaßdüse geleitet, in dem ein Luftstrom aufrechterhalten wird. Durch die scherende Wirkung des Luftstroms und der Auslaßdüse sowie über die Reibung an den Innenwänden des Förderschiauchs werden Flocken des Granulats aufgelockert und teilweise auch aufgelöst, somit die Partikelgrößen und - formen insgesamt vergleichmäßigt. Die Flocken bzw. das Granulat können bzw. kann deshalb ohne Weiteres auf Flächen verteilt und in Hohlräume eingeblasen werden. Die leichten Flocken verhaken sich in der auf diese Weise aufgeschichteten Mineralfasermassen, so daß eine hohe Lagestabilität erreicht wird. Um ein Abrutschen der lockeren Mineralfasermassen auf stärker geneigten Flächen wie beispielsweise Kuppeln von Kirchen zu verhindern, kann dem Massenstrom aus Mineralfasern permanent oder periodisch ein atmosphärisch austrocknendes Binde- und/oder Fixiermittel wie Wasserglas, Kunststoff-Dispersionen jeweils allein oder in Mischung beigemischt werden. Um Verstopfungen des Förderwegs zu vermeiden, werden Einspritzdüsen im Bereich der Anlaßdüse angeordnet. Die Schüttgewichte der im freien Fall verteilten Flocken variieren gewöhnlich zwischen ca. 45 und ca. 60 kg/m3. Durch das Einspritzen von Bindemitteln erhöht sich die Rohdichte geringfügig. Die Schüttung kann auch durch ein nachträgliches Überspritzen der Mineralfasern mit einem unter atmosphärischen Bedingungen austrocknenden und sich dabei verfestigenden Bindemittel, beispielsweise einem Wasserglas, fixiert werden.

Für eine Füllung von Kanälen von Hochlochziegeln nach dem Aufmauern jeweils einer Reihe einer Wand sind Füllmaterialien, wie beispielsweise Sand, gebrochene Gesteine oder Schlacken bekannt, die Schüttgewichte von > 1.400 kg/m3 aufweisen und als schwere ungebundene Massen eine hohe innere Dämpfung aufweisen und das Luftschallschutzmaß der Wände erheblich verbessern können. Wegen der hohen Wärmeleitfähigkeit dieser Füllmaterialien sind diese nicht mehr, vermehrt durch rieselfähige Dämmstoffe, wie Blähgas, Perlite, Bims, Polystyrol-Kugeln ersetzt werden. Um ein rasches Auffüllen im Querschnitt kleinerer Kanäle zu ermöglichen, sind relativ kleine Partikel zu verwenden, was unter Umständen zu einer Staubfreisetzung und damit zu einer gesundheitlichen Belastung der Handwerker führt. Das Befüllen erfolgt zumeist ohne zusätzliche Vorrichtungen, so daß Materialverluste auftreten und die Baustelle verunreinigt wird. Die oberen Lagerflächen der Ziegel müssen anschließend von überschüssigem Material befreit werden. Aus nachträglich angebohrten Hohlräumen läuft die lose Füllung leicht heraus.

Aus der DE 25 32 873 A1 ist ein Verfahren zur Herstellung eines hochwärmedämmenden Mauerwerks bekannt. Dieses Mauerwerk besteht aus Steinen mit Hohlräumen, die aufeinander geschichtet werden, wobei jeweils nach dem Setzen einer oder mehrerer Schichten Steine die senkrecht ausgerichteten Hohlräume mit einem leichten Wärmedämmstoff gefüllt werden. Diesbezüglich ist vorgeschlagen, den Wärmedämmstoff durch Einrieseln unter Ausnutzung der Schwerkraft oder durch Einblasen mit Druckluft oder durch Einschwemmen mit Flüssigkeit einzubringen. Als Wärmedämmstoff ist faserige Mineralwolle offenbart, der Kunstharz beigemischt werden kann. Die DE 25 32 873 A1 offenbart demnach lediglich ein Verfahren zur Herstellung eines hochwärmedämmenden Mauerwerks aus einzelnen Steinen, nachdem diese aufeinander geschichtet sind. Demzufolge stehen diese Steine auf einem Untergrund auf, der nur einen begrenzten Zugang zum Einbringen von Dämmstoffpartikeln erlaubt. Es verbleibt lediglich die in der DE 25 32 873 A1 dargestellte Möglichkeit, den Wärmedämmstoff vom oberen Ende des Mauerwerks unter Ausnutzung der Schwerkraft in die Hohlräume der aufgeschichteten Steine einzubringen. Eine Überwachung der Qualität dieser Vorgehensweise ist nicht möglich. DE 31 22 087 A1 offenbart ein Verfahren und eine Vorrichtung zur Herstellung eines Formsteines gemäß dem Oberbegriff der Ansprüche 1 und 13. Es ist eine Aufgabe der vorliegenden Erfindung, ein alternatives Verfahren zur Herstellung eines Formsteins und eine Vorrichtung zur Durchführung des Verfahrens zu schaffen, wobei eine hohe und gleichmäßige Qualität der befüllten Formsteine möglich ist.

Diese Aufgabe wird gemäß der vorliegenden Erfindung durch ein Verfahren nach Anspruch 1 sowie eine Vorrichtung nach Anspruch 13 gelöst.

Die abhängigen Ansprüche beziehen sich jeweils auf individuelle Ausgestaltungen der vorliegenden Erfindung.

Das Verfahren gemäß der vorliegenden Erfindung dient zur Herstellung eines Formsteins, beispielsweise eines Mauersteins, insbesondere eines Ziegels mit einem vorzugsweise im wesentlichen quaderförmigen Körper, der zwei im wesentlichen parallel und im Abstand zueinander ausgerichtete große Oberflächen und im wesentlichen hierzu rechtwinklig verlaufende Seitenflächen sowie im wesentlichen parallel zu den Seitenflächen und im wesentlichen rechtwinklig zu den großen Oberflächen verlaufende Kanäle aufweist.

Das Schalldämmvermögen derartiger Formsteine ist im starken Maße von der Zahl der Kanäle, ihrer Größe, deren Anordnung bzw. Symmetrie, deren Periodizität, der Scherbendichte und der Form der Stege abhängig, welche die einzelnen Kanäle voneinander trennen. Um einen raschen Baufortschritt bei der Errichtung von Mauerwerken zu erzielen und die Zahl der Fugen, insbesondere die Zahl der mörtellosen Stoßfugen, zu vermindern, werden möglichst großformatige Ziegel zur Erzeugung eines solchen Mauerwerks verwendet. Wird hierbei Dünnbettmörtel im Tauchverfahren appliziert, können die Kanäle einzelner Formsteine zu lang vertikal verlaufenden Kanälen verbunden werden. Deren Begrenzungswände lassen sich leicht durch Luftschall anregen, wobei die Hohlräume wie Resonanzkörper wirken. Gleichzeitig leiten sie auch den Körperschall in hohem Maße. Durch SchallLängsleitung kann zudem die Schallenergie leicht über die raumbegrenzenden Decken weit in das Gebäudeinnere gelangen.

Durch eine entsprechende Gestaltung der Formsteinkanäle, deren Anordnung und eine möglichst hohe Scherbendichte kann das Schalldämmvermögen der Formsteine verbessert werden. Durch die gesteigerte Festigkeit der Formsteinscherben steigt nicht nur die Druckfestigkeit des gesamten Formsteins, gleichzeitig sinkt auch die Bruchgefahr bei den feingestalteten Formsteinen, so daß die Ausschußraten deutlich sinken. Da diese Ausführungsformen zumindest den Wärmedurchlaßwiderstand der Formsteine verringern, werden in die Kanäle des Formsteins zumindest teilweise Füllungen aus einem zumindest begrenzt kompressiblen Dämmstoffmaterial, insbesondere aus einem Mineralfaserdämmstoff, eingebracht. Derartiges Dämmstoffmaterial wirkt zudem schallabsorbierend. Erfindungsgemäß werden die Füllungen aus Dämmstoffmaterial zumindest für einen Teil der Kanäle in Form von schütt- und/oder einblasfähigen Dämmstoffpartikeln aus Mineralfasern mit Bindemitteln vorgesehen, was insbesondere bei einer Vielzahl kleiner und/oder irregulär geformter Kanäle entsprechend wirtschaftlich ist.

Die schütt- und/oder blasfähigen Dämmstoffpartikel werden in die Kanäle eingeblasen und/oder eingesaugt, wodurch ein ordnungsgemäßes und schnelles Füllen der Kanäle mit den Dämmstoffpartikeln gewährleistet werden kann.

Die Kanäle des Formsteins werden vorteilhaft mit einem regelmäßigen, insbesondere symmetrischen, vorzugsweise rechteckigen, runden oder elliptischen Querschnitt ausgebildet. Alternativ können die Kanäle auch mit unterschiedlich großen Querschnitten ausgebildet werden.

Die schütt- und/oder blasfähigen Dämmstoffpartikel, insbesondere die Mineralfasern, werden mit Bindemitteln, insbesondere mit anorganischen Wassergläsern, Kieselsol, organisch modifizierten Silanen, Kunststoffdispersionen und/oder duroplastisch aushärtenden, in Wasser löslichen Harzen, beispielsweise Phenolharz und/oder Thermoplasten, eingebracht, wobei die Bindemittel ergänzend Pigmente und/oder Füllstoffe aufweisen können. Auf diese Weise kann ein sicherer Halt der schütt- und/oder blasfähigen Dämmstoffpartikel in den Kanälen gewährleistet werden.

Die schütt- und/oder blasfähigen Dämmstoffpartikel werden bevorzugt aus einem Mineralfasergranulat hergestellt, das bis zu 20 Masse-% Bindemittel aufweist. Alternativ können die schütt- und/oder blasfähigen Dämmstoffpartikel auch aus bindemittelfreien Mineralfasern hergestellt werden, die beim Einbringen in die Kanäle mit bis zu 20 Masse-% Bindemitteln vermischt werden können.

Das Bindemittel in den schütt- und/oder blasfähigen Dämmstoffpartikeln trocknet entweder atmosphärisch oder wird vor allem in den oberflächennahen Zonen dadurch verfestigt, daß die Formsteine einer Wärmestrahlung ausgesetzt werden. Dazu kann eine Mikrowellenstrahlung und/oder ein durch die schütt- und/oder blasfähigen Dämmstoffpartikel geführter erwärmter Luftstrom und/oder zumindest ein Wärmestrahler verwendet werden. Auch ist es möglich, daß die schütt- und/oder blasfähigen Dämmstoffpartikel in die Kanäle eines erwärmten, insbesondere eine Temperatur zwischen 100°C und 180°C, vorzugsweise zwischen 150°C und 180°C, aufweisenden Formstein eingebracht werden.

Das Einbringen der schütt- und/oder blasfähigen Dämmstoffpartikel und der Bindemittel in die Kanäle des Formsteins kann zeitlich nacheinander oder gleichzeitig erfolgen.

Ferner werden gemäß einer weiteren Ausführungsform der vorliegenden Erfindung ergänzend aerosolartig zerstäubte Öle bzw. Öl-Emulsionen in die Kanäle eingebracht, insbesondere eingeblasen und/oder eingesaugt. Die zusätzliche Imprägnierung mit Öl soll die häufig geforderte Wasserabweisung der Dämmstoffpartikel erhöhen oder nach der Zugabe von Bindemitteln wieder auf den alten Stand bringen. Ein für das blasende und/oder saugende Einbringen der schütt- und/oder blasfähigen Dämmstoffpartikel, insbesondere der Mineralfasern, vorgesehener Luftstrom wird bevorzugt in Abhängigkeit eines gewünschten Füllungsgrades der Kanäle und/oder der Dichte der in den Kanälen angeordneten Dämmstoffpartikel eingestellt. Dabei können der Unterdruck und/oder der Abluftstrom variiert werden. Durch den individuellen Anschluß einzelner Kanäle oder von Kanalreihen an das Abluftsystem kann die Befüllung auch unterschiedlicher Kanäle sowohl hinsichtlich des Zeitaufwandes als auch der Rohdichte der schütt- und/oder blasfähigen Dämmstoffpartikel vergleichmäßigt werden. Umgekehrt wird dadurch auch eine größere Variationsbreite hinsichtlich der Befüllung erreicht.

Die schütt- und/oder blasfähigen Dämmstoffpartikel werden vorteilhaft mit einer Dichte zwischen 45 kg/m³ und 120 kg/m³ in die Kanäle eingebracht, und zwar in Abhängigkeit von der ursprünglichen Partikeigröße der schütt- und/oder blasfähigen Dämmstoffpartikel und den Kanalgeometrien. Gerade bei den hochverdichteten schütt- und/oder blasfähigen Dämmstoffpartikeln kommt es nach dem Einbringen in die Kanäle des Formsteins noch zu einer leichten Expansion, so daß der Dämmstoff aus den Kanälen herausquellen kann. Ist dies der Fall, so werden nach dem Einbringen der schütt- und/oder blasfähigen Dämmstoffpartikel über zumindest eine große Oberfläche des Formkörpers hervorstehende Dämmstoffpartikel entfernt. Dies kann beispielsweise durch ein leichtes Überbürsten erfolgen.

Bevorzugt werden die schütt- und/oder blasfähigen Dämmstoffpartikel nach dem Einbringen in die Kanäle im Bereich der großen Oberflächen des Formkörpers fixiert. Die Fixierung im Bereich zumindest einer großen Oberfläche kann mit einer Schicht aus zumindest einem Bindemittel erfolgen, das vorzugsweise auf die schütt- und/oder blasfähigen Dämmstoffpartikel aufgespritzt und insbesondere atmosphärisch und/oder in einem Härteofen gehärtet wird.

Gemäß einer weiteren alternativen Ausführungsform werden die schütt- und/oder blasfähigen Dämmstoffpartikel nach dem Einbringen in die Kanäle im Bereich der großen Oberflächen des Formkörpers vorzugsweise mit einem Öl imprägniert.

Neben Mineralwolle-Flocken können die schütt- und/oder blasfähigen Dämmstoffpartikel auch aus Zellulosefasern, Blähglas, Bims und/oder kugelförmigen Polystyrolpartikeln ausgebildet werden. Diese werden dann in die Kanäle eingeführt und dabei mit Bindemitteln imprägniert und untereinander sowie mit den Innenwänden der Kanäle verbunden. Zumeist reicht schon der formschlüssige Verbund mit den Lochinnenwänden aus, um ein Herausfallen nicht allzu schwerer Massen zu verhindern.

Bevorzugt werden die Kanäle nach dem Einbringen der schütt- und/oder blasfähigen Dämmstoffpartikel mit zumindest einem Verschlußelement, insbesondere einem Pfropfen aus Dämmstoffmaterial, vorzugsweise aus Mineralwolle, verschlossen, wobei der Pfropfen vorteilhaft eine Höhe von ca. 20 mm bis 50 mm aufweist. Das Verschlußelement wird dann bevorzugt mit dem Formkörper verbunden, insbesondere verklebt. Die Verschlußelemente können aus schütt- und/oder blasfähigen Dämmstoffpartikeln und Bindemitteln ausgebildet werden, wobei zwischen den Verschlußelementen ungebundene Dämmstoffpartikel angeordnet werden.

Ein Formstein, beispielsweise Mauerstein, insbesondere Ziegel, mit einem insbesondere im wesentlichen quaderförmigen Körper, der zwei im wesentlichen parallel und im Abstand zueinander ausgerichtete große Oberflächen und im wesentlichen hierzu rechtwinklig verlaufende Seitenflächen sowie im wesentlichen parallel zu den Seitenflächen und im wesentlichen rechtwinklig zu den großen Oberflächen verlaufende Kanäle aufweist, hat in zumindest einem Kanal eine Füllung aus einem zumindest begrenzt kompressiblen Dämmstoffmaterial, insbesondere aus einem Mineralfaserdämmstoff. Zumindest ein Teil der Kanäle ist mit schütt- und/oder blasfähigen Dämmstoffpartikeln aus Mineralfasern mit oder ohne Bindemittel ausgefüllt.

Die nachfolgend beschriebenen individuellen Ausgestaltungen des Formsteins weisen jeweils Vorteile auf, die unter Bezugnahme auf das erfindungsgemäße Verfahren bereits ausführlich erläutert wurden, weshalb nachfolgend auf die Vorteile nicht erneut eingegangen wird.

Die Kanäle weisen vorteilhaft einen regelmäßigen, insbesondere symmetrischen, vorzugsweise rechteckigen, runden oder elliptischen Querschnitt auf. Ferner sind die Kanäle vorteilhaft mit unterschiedlich großen Querschnitten ausgebildet.

Die schütt- und/oder blasfähigen Dämmstoffpartikel, insbesondere die Mineralfasern, sind bevorzugt mit flüssigen Bindemitteln, insbesondere mit anorganischen Wassergläsern, Kieselsol, organisch modifiziertem Silan, Kunststoffdispersionen und/oder duroplastisch aushärtenden, wasserlöslichen Harzen eingebracht, wobei die Bindemittel ergänzend Pigmente und/oder Füllstoffe aufweisen können.

Ergänzend können aerosolartig zerstäubte Öle bzw. Öl-Emulsionen in die Kanäle eingebracht werden, insbesondere eingeblasen und/oder eingesaugt werden.

Die schütt- und/oder blasfähigen Dämmstoffpartikel weisen bevorzugt eine Dichte zwischen 45 kg/m³ 120 kg/m³ auf.

Ferner schließen die schütt- und/oder blasfähigen Dämmstoffpartikel vorteilhaft bündig mit zumindest einer großen Oberfläche des Formkörpers ab.

Die schütt- und/oder blasfähigen Dämmstoffpartikel können im Bereich der großen Oberflächen des Formkörpers fixiert sein, wobei die schütt- und/oder blasfähigen Dämmstoffpartikel im Bereich zumindest einer großen Oberfläche vorteilhaft mit einer Schicht aus zumindest einem Bindemittel fixiert sind, welche vorzugsweise auf die schütt- und/oder blasfähigen Dämmstoffpartikel aufgespritzt und insbesondere atmosphärisch und/oder in einem Härteofen gehärtet ist.

Vorteilhaft sind die schütt- und/oder blasfähigen Dämmstoffpartikel im Bereich der großen Oberflächen des Formkörpers vorzugsweise mit einem Öl imprägniert.

Die schütt- und/oder blasfähigen Dämmstoffpartikel können aus Mineralwolle-Flocken oder alternativ aus Zellulosefasern, Blähglas, Bims und/oder kugelförmigen Polystyrolpartikeln ausgebildet sein. Die Kanäle können dann mit zumindest einem Verschlußelement, insbesondere einem Pfropfen aus Dämmmaterial, vorzugsweise aus Mineralwolle, verschlossen sein. Das Verschlußelement ist dabei vorteilhaft mit dem Formstein verbunden, insbesondere verklebt. Zudem bestehen die Verschlußelemente bevorzugt aus schütt- und/oder blasfähigen Dämmstoffpartikeln und Bindemitteln, wobei zwischen den Verschlußelementen ungebundene Dämmstoffpartikel angeordnet sind.

Die Füllung weist bevorzugt eine diffusionsoffene Schicht auf, die zusammen mit dem Dämmstoffmaterial in dem Kanal angeordnet ist, wobei die diffusionsoffene Schicht vorteilhaft unmittelbar an einer Wand des Kanals anliegt.

Die einzelnen Kanäle des Formsteins sind bevorzugt benachbart angeordnet und durch Querstege, die vorteilhaft zumindest teilweise biegeweich ausgebildet sind, voneinander getrennt.

Ferner bezieht sich die vorliegende Erfindung auf eine Vorrichtung zum Einbringen von schütt- und/oder blasfähigen Dämmstoffpartikeln in Formsteinkanäle mit zumindest einer Auflagefläche, die der Auflage zumindest des mit einer Füllung zu versehenden und große Oberflächen aufweisenden Formsteins mit zumindest einem rechtwinklig zu den großen Oberflächen verlaufenden Kanal dient, und mit einer Fördereinrichtung, die schütt- und/oder blasfähige Dämmstoffpartikel, insbesondere Mineralfasern mit einem den Kanal durchströmenden Luftstrom fördert.

Die Fördereinrichtung weist bevorzugt ein insbesondere glockenförmig ausgebildetes Gehäuse auf, das eine Zufuhrleitung für die einzublasenden schütt- und/oder blasfähigen Dämmstoffpartikel aufweist und unter Zwischenlage einer Dichtung auf eine große Oberfläche des Formsteins aufsetzbar ist.

Zudem oder alternativ kann die Fördereinrichtung ein Gehäuse aufweisen, das eine Absaugleitung für die Erzeugung eines Unterdrucks in dem Kanal des Formsteins für die einzusaugenden schütt- und/oder blasfähigen Dämmstoffpartikel aufweist und unter Zwischenlage einer Dichtung auf eine große Oberfläche eines Formsteins aufsetzbar ist. Das Gehäuse kann dabei einen dem Formstein zugewandten Eingangsbereich umfassen, der eine diesen Eingangsbereich überspannende luftdurchlässige Membran aufweist, die für die schütt- und/oder blasfähigen Dämmstoffpartikel im wesentlichen undurchlässig ist.

Die Förderrichtung der blasfähigen Dämmstoffpartikel ist im wesentlichen horizontal ausgerichtet, wobei der Kanal im Formstein ausgangsseitig mit einer luftdurchlässigen Membran verschlossen ausgebildet ist. Die Membran kann als Folie ausgebildet sein und ist vorzugsweise lösbar mit dem Formstein verbindbar. Das Gehäuse weist an seinem dem Formstein zugewandten Eingangs- und/oder Ausgangsbereich bevorzugt eine Leitvorrichtung, beispielsweise in Form von Leitblechen, auf.

Ferner umfaßt das Gehäuse vorteilhaft eine Einspritzvorrichtung für die Zugabe von Binde- und/oder Imprägniermitteln in den Förderstrom.

Die Einspritzeinrichtung umfaßt vorteilhaft zumindest zwei Einspritzdüsen, die diametral gegenüberliegend beidseitig der Zufuhrleitung angeordnet sind.

Ferner ist die Leitvorrichtung, insbesondere die Länge der Leitbleche, bevorzugt einstellbar ausgebildet.

Zudem kann das Gehäuse eine Sammelvorrichtung für überschüssige Dämmstoffpartikel umfassen.

Die Zufuhrleitung und/oder die Absaugleitung umfaßt bzw. umfassen bevorzugt ein Ventil, über das überschüssige Förderluft abführbar ist.

Die Einspritzvorrichtung weist bevorzugt zumindest einen Vorratsbehälter für Bindemittel auf.

Die Zufuhrleitung und/oder die Absaugleitung sind vorteilhaft an einer Pumpe, insbesondere einer Vakuumpumpe und/oder einem Ventilator angeschlossen.

Ein Bauwerk, insbesondere eine Mauer, besteht aus zumindest zwei Formsteinen, wobei die Formsteine mit zwei Seitenflächen aneinanderstoßend angeordnet sind, wobei zwischen den benachbart angeordneten Formsteinen ein Dämmelement, insbesondere aus Mineralfasern, angeordnet ist.

Die Formsteine weisen zumindest im Bereich ihrer aneinanderstoßenden Seitenflächen bevorzugt alternierend angeordnete Vorsprünge, insbesondere Federn und Ausnehmungen, insbesondere Nuten, auf.

Das Dämmelement ist vorteilhaft als Formkörper ausgebildet, wobei es sich bevorzugt über annähernd die gesamte Seitenfläche erstreckt und bündig mit einer Kante der Seitenfläche abschließt. Die Materialstärke des Dämmelementes beträgt vorteilhaft zwischen 3 mm bis 15 mm, insbesondere zwischen 3 mm und 5 mm. Die Rohdichte des Dämmelementes liegt bevorzugte im Bereich zwischen 50 kg/m³ und 120 kg/m³.

Das Dämmelement umfaßt vorteilhaft zumindest einseitig eine haftvermittelnde Beschichtung, so daß es fest an einem Formstein positionierbar ist.

Vorteilhaft weist jede Seitenfläche der Formsteine eine Nut auf, die der Aufnahme eines Dämmstoffstreifens dient, der die Nuten benachbart angeordneter Formsteine im wesentlichen, vorzugsweise vollständig, ausfüllt. Die Nut ist bevorzugt im wesentlichen mittig in der Seitenfläche angeordnet und kann unterschiedliche Tiefen aufweisen.

Der Dämmstoffstreifen weist vorteilhaft eine gegenüber der Breite der Nut geringfügig vergrößerte Materialstärke auf, vorzugsweise zwischen 10 mm und 70 mm, insbesondere zwischen 20 mm und 40 mm.

Die Nut weist bevorzugt ein Verhältnis von Tiefe zu Breite von 3:1 auf.

Die Rohdichte des Dämmstoffstreifens beträgt vorteilhaft > 30 kg/m³.

Ferner ist der Dämmstoffstreifen bevorzugt auf zumindest einer großen Fläche mit einer gleitenden und/oder strahlungsreflektierenden Kaschierung, beispielsweise einem Wirrvlies, insbesondere einem Glasfaser- oder Kunstfaser-Wirrvlies oder einer vorzugsweise perforierten Metallfolie versehen. Nicht brennbare Glasfaser-Wirrvliese, aber auch Kunstfaser-Wirrvliese können als Gleitschicht dienen. Metallfolien sollen durch ihr Reflektionsvermögen den Strahlungsdurchgang und damit den Energiedurchgang reduzieren.

Auch kann der Dämmstoffsfireifen auf einer großen Oberfläche eine im wesentlichen luftundurchlässige Beschichtung aufweisen.

Nachfolgend wird die Erfindung anhand von Ausführungsbeispielen unter Bezugnahme auf die beiliegende Zeichnung genauer beschrieben. Darin ist:
Fig. 1 eine geschnittene Vorderansicht einer Vorrichtung zum Einziehen von Formkörpern in Kanäle eines Formsteins;
Fig. 2 eine geschnittene Querschnittansicht einer weiteren Vorrichtung zum Einziehen von Formkörpern in Kanäle eines Formsteins;
Fig. 3 eine Querschnittansicht einer ersten Ausführungsform eines Formsteins;
Fig. 4 eine geschnittene Vorderansicht einer Ausführungsform einer Vorrichtung zum Füllen von Formsteinkanälen mit schütt- oder blasfähigen Dämmstoffpartikeln gemäß der vorliegenden Erfindung;
Fig. 5 eine Teilquerschnittansicht einer zweiten Ausführungsform eines Formsteins ;
Fig. 6 eine Querschnittansicht einer dritten Ausführungsform eines Formsteins;
Fig. 7 eine Querschnittansicht zweier Formsteine gemäß einer fünften Ausführungsform;
Fig. 8 eine Querschnittansicht einer vierten Ausführungsform eines Formsteins und
Fig. 9 eine Querschnittansicht einer fünften Ausführungsform eines Formsteins.

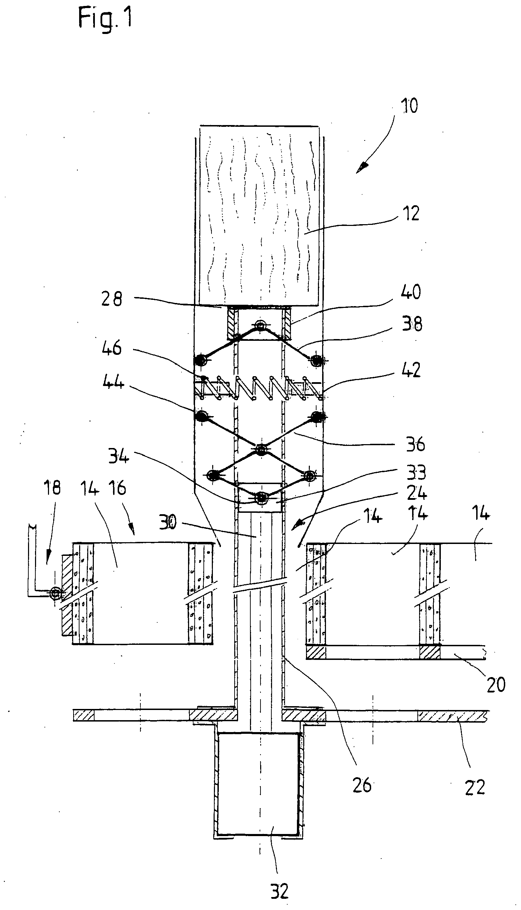

Fig. 1 zeigt eine teilweise geschnittene Vorderansicht einer Vorrichtung 10, die als Einzugsvorrichtung zum Einziehen eines Formkörpers 12 in einen Kanal 14 eines Formsteins 16 dient. Bei dem Formstein 16 handelt es sich vorliegend um einen Kanäle 14 aufweisenden Hochlochziegel, der mittels eines exakt zu positionierenden Greifers 18 der Vorrichtung 10 derart gehalten ist, daß sich die Kanäle 14 des Formsteins 16 vertikal erstrecken. Der Greifer 18 ist zumindest horizontal, bevorzugt jedoch frei im Raum verfahrbar, so daß der Formstein 16 und die Vorrichtung 10 relativ zueinander derart bewegt werden können, daß die einzelnen Kanäle 14 des Formsteins 16 mittels der Vorrichtung 10 mit Formkörpern 12 gefüllt werden können. Der Formstein 16 kann wahlweise mit Hilfe eines alternativen Auflagers gehalten sein, wobei das alternative Auflager vorliegend durch eine Lochplatte 20 gebildet wird, deren Lochbild entsprechend den Kanälen 14 des Formsteins 16 ausgebildet ist.

Die Vorrichtung 10 ist auf einer zumindest in der Höhe, bevorzugt jedoch frei im Raum verfahrbaren Plattform 22 montiert. Die Plattform 22 kann beispielsweise an nicht dargestellten Führungsschienen befestigt sein und ist mittels pneumatisch oder hydraulisch bewegten Kolbenstangen oder Antriebsmotoren zumindest auf und ab bewegbar. Um verschiedene Positionen der Plattform 22 präzise ansteuern zu können, erfolgt der Antrieb bevorzugt durch einen hydraulischen Antrieb. Die Plattform 22 kann aber auch an einem vektoriell gesteuerten, dreidimensional bewegbaren Arm eines sogenannten Roboters befestigt sein, um mit Hilfe von geeigneten Sensoren die einzelnen Kanäle 14 des Formsteins 16 exakt ansteuern zu können.

An dieser Stelle sei angemerkt, daß die in Fig. 1 dargestellte Vorrichtung 10 zum Füllen jeweils eines Kanals 14 eines Formsteins 16 mit einem Formkörper 12 dient. Natürlich kann die Vorrichtung 10 auch derart erweitert werden, daß mehrere Kanäle 14 oder ganze Kanalreihen eines oder mehrerer Formsteine 16 gleichzeitig mit entsprechenden Formkörpern 12 befüllbar sind. Hierauf soll der Einfachheit halber nachfolgend jedoch nicht weiter eingegangen werden.

An der Plattform 22 ist eine Stützkonstruktion 24 angeordnet, die vorliegend aus einer Hülse 26 ausgebildet ist, die an ihrem oberen freien Ende fest mit einer als Stempel dienenden Platte 28 verbunden ist, deren Außenkontur kleiner als die des mit dem Formkörper 12 zu füllenden Kanals 14 des Formsteins 16 ist, so daß sich die Platte 28 durch den entsprechenden Kanal 14 hindurchbewegen läßt. Die Platte 28 dient in erster Linie der Aufnahme des Formkörpers 12.

Innerhalb der Hülse 26 ist eine Kolbenstange 30 eines wiederum wegen der exakten Ansteuerung bestimmter Höhenpositionen bevorzugt hydraulischen Triebes angeordnet und wahlweise auf- oder abwärts bewegbar. Der erforderliche Druckzylinder 32 des hydraulischen Triebes ist an der Plattform 22 befestigt. Die Kolbenstange 30 kann naturgemäß auch pneumatisch oder mittels Antriebsmotoren auf und ab bewegt werden, wobei jedoch, wie bereits zuvor angezeigt, aufgrund der exakten Positionierbarkeit ein hydraulischer Trieb bevorzugt ist.

An dieser Stelle sei darauf hingewiesen, daß durch einen einzelnen Druckzylinder auch mehrere Kolbenstangen bewegbar sind, falls mehrere Kanäle 14 eines Formsteins 16 gleichzeitig mit Formkörpern 12 gefüllt werden sollen. In diesem Fall können die Kolbenstangen beispielsweise an einer gemeinsamen Platte befestigt werden, die ihrerseits durch eine zentrale Kolbenstange des Druckzylinders bewegt wird.

An dem am freien Ende der Kolbenstange 30 vorgesehenen Kopf 33 sind beidseitig stiftförmige Vorsprünge 34 zur Ankopplung jeweils eines druck- und zugaufnehmenden Gestänges 36 befestigt. Um die Auf- und Abwärtsbewegungen der Kolbenstange 30 bzw. des Gestänges 36 in vertikaler Richtung zu ermöglichen, ist die Hülse 26 seitlich offen, so daß sich die Vorsprünge 34 durch diese hindurch erstrecken können. Beispielsweise können entsprechende, sich vertikal erstreckende Führungsschlitze vorgesehen sein.

Ein weiteres Gestänge 38 ist an einer oberen Führungshülse 40 befestigt, die über die Hülse 26 geschoben und auf dieser auf- und abwärts geführt bewegbar ist. Die Aufwärtsbewegung der Führungshülse 40 wird durch die Platte 28 begrenzt, die vorliegend als Anschlag dient. Die Führungshülse 40 kann alternativ ähnlich wie der Kopf 33 der Kolbenstange 30 innerhalb der Hülse 26 geführt sein.

Beide Gestänge 36 und 38 sind an zwei Greiferschalen 42 und 44 befestigt und geben diesen eine exakte Führung.

Die Greiferschalen 42 und 44 können beispielsweise aus dünnen Blechen bestehen, welche die für die Kompression des Formkörpers 12 erforderlichen Druckkräfte ohne wesentliche Verformungen aufnehmen können. Die Greiferschalen 42 und 44 können zur Versteifung mit Sicken versehen werden, die gegebenenfalls Führungsschienen bilden. Um ein verschleißarmes Gleiten auf den Innenwänden der Kanäle 14 des Formsteins 16 zu ermöglichen, können auch Kunststoffleisten oder federnde Metalleisten außen an die Greiferschalen 42 und 44 angebracht werden. Alternativ können auch Rollen bzw. Räder außen an den Greiferschalen 44 und 46 angeordnet werden. Anstelle geschlossener Greiferschalen 42 und 44 können diese gabelförmig aufgebaut werden, wobei die Zinken aus Stäben oder aus Zungen aus Federstahl bestehen. Weist der Formstein 16 nur geringe Stegdicken auf, welche die einzelnen Kanäle 14 voneinander trennen, so können die Verstärkungs- und Führungsschienen wie auch die Zinken der gabelförmigen Greifer bei Vorrichtungen zum gleichzeitigen Befüllen mehrerer Kanäle 14 eines Formsteins 16 jeweils in Bezug auf die beim Öffnen gegeneinander bewegten Greiferschalen 42, 44 versetzt angeordnet werden. Damit kann die größtmögliche Öffnungsweite bei einer gleichzeitigen Befüllung hintereinanderliegender Kanäle 14 erreicht werden. Dieser Aspekt ist jedoch zu vernachlässigen, wenn die Vorrichtung zur Befüllung jeweils nur eines Kanals 14 eines Formsteines 16 mit einem Formkörper 12 dient, oder wenn jede zweite Kanalreihe eines Formsteines 16 übersprungen wird, so daß die einzelnen Greiferschalen 42, 44 nicht so dicht beieinander liegen.

Die Greiferschalen 42 und 44 sind an den unteren Ende einwärts abgewinkelt, so daß diese leicht in die aufzufüllenden Kanäle 14 des Formsteins 16 bewegt werden können. Zum Einsetzen des Formkörpers 12 in einen Kanal 14 des Formsteins 16 wird die Vorrichtung 10 wie folgt betrieben:
Zur Aufnahme des Formkörpers 12 wird zunächst die Stützkonstruktion 24 mitsamt den nach unten gezogenen Greiferschalen 42 und 44 über die Plattform 22 in die obere Position gebracht, die in Fig. 1 dargestellt ist. Durch die nach oben bewegte Kolbenstange 30 übt das untere Gestänge 36 einen seitlichen, auswärts gerichteten Druck auf die Greiferschalen 42 und 44 aus. Dasselbe erfolgt durch das obere Gestänge 44, nachdem dieses gegen die als Anschlag dienende Platte 28 gefahren wird. Die in Fig. 1 dargestellte Feder 46, die sich horizontal zwischen den Greiferschalen 42 und 44 erstreckt, drückt diese zusätzlich auseinander. Sofern die Feder 46 ausreichend geführt ist, kann sie auch die Funktion des oberen Gestänges 36 übernehmen oder ergänzt diese zumindest. Bei der Feder 46 handelt es sich bevorzugt um eine Metallfeder. Alternativ kann aber auch ein luftgefülltes Gummipolster oder eine Gasdruckfeder vorgesehen sein. Ferner ist es natürlich möglich, mehrere Federn 46 anzuordnen.

Der Formkörper 12 wird wahlweise von Hand, mittels einer entsprechenden Aufgabe-Vorrichtung oder mit Hilfe eines Roboters zwischen die Greiferschalen 42 und 44 geführt oder fallen gelassen und setzt auf die Platte 28 auf. Nach dem Einführen des Formkörpers 12 wird die Kolbenstange 30 mit Hilfe des Druckzylinders 32 in eine Abwärtsbewegung versetzt. Dadurch wird das untere Gestänge 36 in Zugrichtung ausgerichtet. Mit kurzer Verzögerung wird die Plattform 22 ebenfalls abwärts bewegt, so daß die abgewinkelten Greiferschalen 42 und 44 die Innenkanten der Kanäle 14 des Formsteins 16 berühren. Durch den Zug der Kolbenstange 30 wird nun eine ausreichende Gegenkraft über die beiden Greiferschalen 42 und 44 aufgebaut, die nun zur Kompression des Formkörpers 12 führt.

Die Abwärtsbewegung der Plattform 22 wird gestoppt, wenn sich die Platte 28 etwa in Höhe der unteren Öffnung des Kanals 14 des Formsteins 16 befindet. Die exakte Position ist abhängig von der Steifigkeit des Dämmstoffs des Formkörpers 12, zumeist liegt sie jedoch oberhalb der unteren Öffnung des Kanals 14, um zu verhindern, daß der Formkörper 12 aus dem Kanal 14 herausragt. Die Kolbenstange 30 wird weiter nach unten bewegt. Da der Formkörper 12 an der Platte 28 festgehalten wird und sich dabei gegebenenfalls staucht, werden die Greiferschalen 42 und 44 an diesem vorbei aus dem Kanal 14 des Formsteins 16 herausgezogen.

In der gespannten Position werden die Greiferschalen 42 und 44 entweder unter den nächsten Kanal 14 des Formsteins 16 verfahren oder der Formstein 16 wird entsprechend mit Hilfe des Greifers 18 bewegt. Anschließend wird die Stützkonstruktion 24 zur Aufnahme eines neuen Formkörpers durch den entsprechenden Kanals 14 des Formsteins 16 nach oben verfahren.

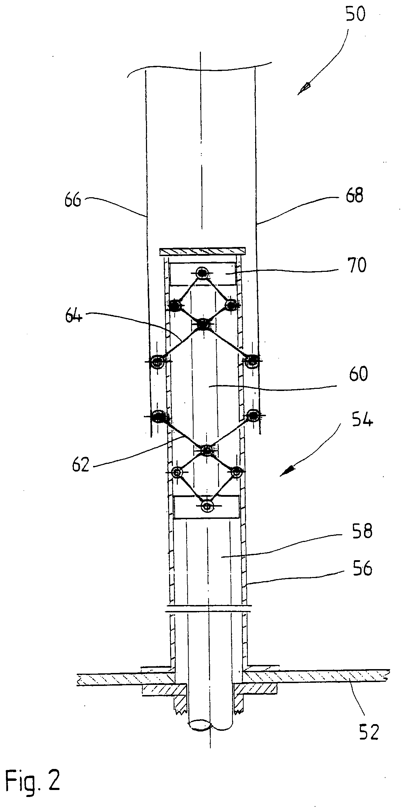

Fig. 2 zeigt eine teilweise geschnittene Vorderansicht einer weiteren Vorrichtung 50, die zum Einziehen eines Formkörpers in einen Kanal eines Formsteins dient. Die Vorrichtung 50 umfaßt eine Plattform 52, die mit geeigneten Mitteln zumindest auf- und abwärts, bevorzugt jedoch frei im Raum verfahrbar ist. An der Plattform 22 ist eine Stützkonstruktion 54 gehalten, die eine Hülse 56 aufweist, in der zwei teleskopartig ineinander verschiebbare Kolbenstangen 58 und 60 angeordnet und auf- und abwärts bewegbar sind. Die Betätigungsmittel für die Kolbenstangen 58 und 60, bei denen es sich beispielsweise um Druckzylinder handeln kann, sind in Fig. 2 nicht dargestellt.

An der Kolbenstange 58 ist ähnlich wie bei der in Fig. 1 dargestellten Vorrichtung 10 ein unteres Gestänge 62 und an der Kolbenstange 60 ein oberes Gestänge 64 befestigt, die jeweils an Greiferschalen 66 und 68 angeordnet sind.

Der übrige Aufbau der Vorrichtung 50 entspricht im wesentlichen dem der Vorrichtung 10 in Fig. 1, weshalb hierauf nachfolgend nicht näher eingegangen werden soll.

Zum Öffnen der Greiferschalen 66 und 68 wird die Kolbenstange 60 in eine obere Position verfahren. Die Kolbenstange 58 wird so weit aufwärts bewegt, bis die Gestänge 62 und 64 die Greiferschalen 66 und 68 auseinandergeschoben haben. Nach dem Einführen eines Formkörpers 12 werden die Kolbenstangen 58 und 60 auseinandergezogen, so daß die Greiferschalen 66 und 68 nicht nur berührungslos, sondern sogar mit deutlich verringerter Dicke in den entsprechenden Kanal 14 des Formsteins 16 eingezogen werden können. In der unteren Endposition der stempelartigen Platte 70 der Kolbenstange 60 werden die Greiferschalen 66 und 68 so weit, wie es die Kanalweite ermöglicht, auseinandergefahren und von dem Formkörper 12 abgezogen.

Der Formkörper 12 kann generell aus den Greiferschalen 66 und 68 nach oben wie auch seitlich herausragen, so daß er sich bei der Abwärtsbewegung selbst festklemmt und die dabei entwickelten Reibungskräfte das Herausziehen erleichtern bzw. die Stauchung im Bereich der Platte 70 vermindern.

Die teleskopartige Anordnung der Kolbenstangen 58 und 60 ermöglicht eine hohe Kompression des Formkörpers 12 bei gleichzeitig geringer Beanspruchung der Kanalinnenwände, insbesondere der oberen Kanten des Formsteins 16 und den unvermeidlichen Verschleiß an den Außenflächen der Greiferschalen 66 und 68.

Die Formkörper 12, die in die Kanäle 14 der Formsteine 16 eingezogen werden, weisen bevorzugt Rohdichten im Bereich von 20 kg/m³ bis 120 kg/m³ Fasermasse auf. Die für ein sicheres Einklemmen zwischen zumindest zwei gegenüberliegenden Lochinnenwänden erforderlichen Reibungskräfte können wegen er Vielzahl von Dämmstoffvarianten und deren Inhomogenitäten nicht direkt quantifiziert werden. Sie werden aber durch ein entsprechendes und im Bedarfsfall leicht korrigierbares Übermaß in Bezug auf die Kompressionsrichtung erreicht. Das Übermaß kann bei den hierbei üblichen Gehalten an organischen Bindemitteln von ³ 2 Masse-% in Bezug auf die reine Fasermasse mit zunehmender Rohdichte verringert werden. Allgemein übliche Richtwerte sind ca. 1 mm bis ca. 20 mm, vorzugsweise 5 mm bis 10 mm, wobei die Übermaße bei Steinwolle-Dämmstoffen eher geringer sind als bei Glaswolle-Dämmstoffen. Bei der Bemessung der Übermaße ist zu berücksichtigen, daß die Dämmstoffe erheblich gestaucht werden müssen, um sie mitsamt den Greiferschalen in die Löcher ein- und die Bindestempel abziehen zu können. Die meisten Dämmstoffe lassen sich rechtwinkelig zu den großen Oberflächen ohne wesentliche Festigkeitsverluste um ca. 40 % bis 50 % stauchen und erreichen nahezu ihre ursprüngliche Dicke wieder. Die dadurch erreichten Zwängungskräfte sind auch nach längerer Lagerung zumeist ausreichend hoch, um ein Herausfallen der Dämmstoff-Formkörper bei der Handhabung der einzelnen Formsteine 16 zu verhindern. Höhere Zwängungsspannungen sind aber erforderlich, wenn die angeschnittenen Formkörper 12 auch bei der Herstellung von Paßstücken durch Sägen in situ verbleiben sollen.

Das Übermaß der Formkörper 12 in Bezug auf die parallel zu der Kompressionsrichtung der Greiferschalen 66, 68 liegenden Seitenflächen ist in einem starken Maße von deren Klemmwirkung und dem Kompressionswiderstand des Formkörpers 12 abhängig. Bei einem geringen Kompressionswiderstand wird der Formkörper 12 auch bei einem nennenswerten Übermaß hineingezogen. Wenn die Dämmstoffe weniger kompressibel sind, wird das Übermaß nötigenfalls auf 0 oder auf ein geringes Untermaß reduziert, da die quer dazu komprimierten Dämmstoffe ein leichtes Auswölben der Seitenwände über die Dicke bewirken.

Die zur Verwendung kommenden Formkörper 12 können auf zumindest einer Oberfläche beispielsweise mit Glasfaser-Wirrvliesen oder perforierten Metallfolien kaschiert sein. Nicht brennbare Glasfaser-Wirrvliese, aber auch Kunstfaser-Wirrvliese können als Gleitschichten dienen. Metallfolien sollen durch ihr Reflektionsvermögen den Strahlungsdurchgang und damit den Energiedurchgang reduzieren. Dämmstoff-Formkörper mit strahlungsreflektierenden Folien werden insbesondere im raumseitigen und damit in der Heizperiode zu erwärmenden Teil des Formsteins 16 eingesetzt.

Normalerweise werden die Greiferschalen 66, 68 der Einzugsvorrichtung parallel zu der Längsachse der Formsteinkanäle angeordnet. Insbesondere bei steifen Steinwolle-Dämmstoffen können sie jedoch auch quer dazu orientiert sein. Damit können die Greiferschalen 66, 68 weiter zum jeweiligen Kanalzentrum zusammengezogen werden.

Die minimale Kanalgröße des Formsteins 16 wird für das Einziehen von Dämmstoff-Formkörpern technisch durch die Baugröße der Einziehvorrichtung bedingt. Bei einer Vielzahl kleiner und/oder irregulär geformter Löcher ist es wesentlich wirtschaftlicher, diese mit Mineralwolle-Flocken oder anderen blasfähigen Dämmstoffen aufzufüllen.

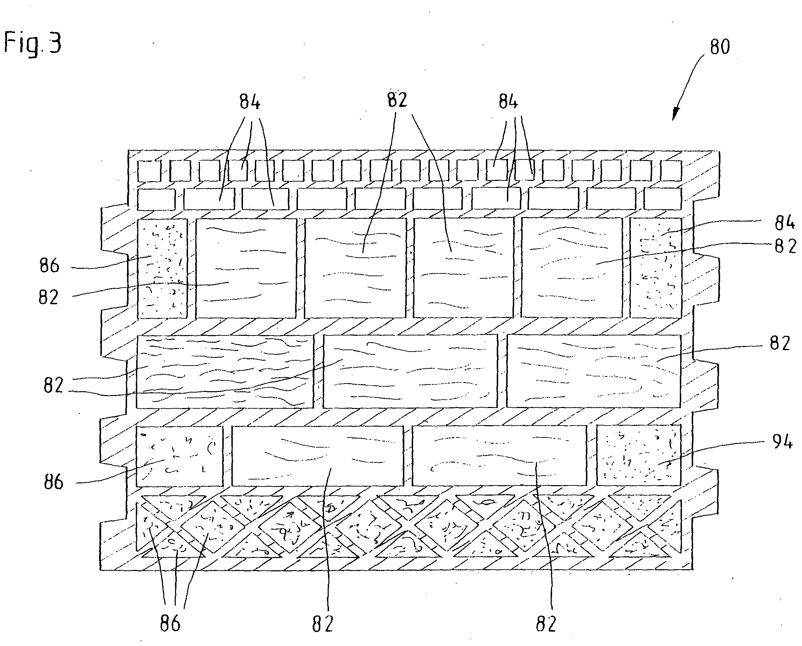

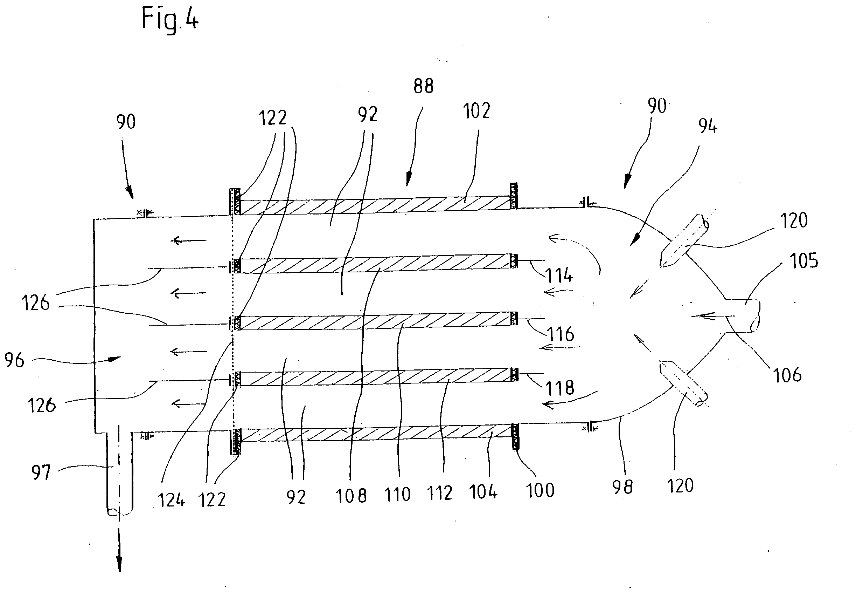

Fig. 3 zeigt beispielhaft eine Querschnittansicht einer Ausführungsform eines Formsteins 80, bei dem es sich um einen sogenannten Hochlochziegel handelt, dessen Kanäle 82 stark unterschiedliche Geometrien, ansonsten aber die übliche Außenform aufweist. Die größeren, langen oder quadratischen Kanäle 82 sind vorliegend mit Formkörpern gefüllt, deren Faserausrichtung bevorzugt quer zu dem während der Heizperiode herrschenden Hauptwärmestrom von der inneren Seitenfläche zu der äußeren Seitenfläche und in Richtung ihres größten Wärmedurchlaßwiderstandes erfolgt. Die Formkörper sind mit einer Rohdichte zwischen 20 kg/m³ und 120 kg/m³ ausgebildet und können zumindest einseitig mit einer gleitenden und/oder strahlungsreflektierenden Kaschierung, beispielsweise einem Wirrvlies, insbesondere einem Glasfaser- oder Kunstfaser-Wirrvlies oder einer vorzugsweise perforierten Metallfolie versehen sein. Die innenliegenden kleineren Kanäle hingegen sind nicht mit Dämmstoffen gefüllt. Alle anderen Kanäle 86, in die keine Formkörper eingesetzt sind, sind mit Mineralwolle-Flocken oder mit sonstigen schütt- und/oder blasfähigen Dämmstoffpartikeln gefüllt. Die schütt- und/oder blasfähigen Dämmstoffpartikel können mit Bindemitteln, insbesondere mit anorganischen Wassergläsern, Kieselsol, organisch modifizierten Silanen, Kunststoffdispersionen und/oder duroplastisch aushärtenden, wasserlöslichen Harzen, beispielsweise Phenolharz und/oder Thermoplaste, versetzt sein, wobei die Bindemittel ergänzend Pigmente und/oder Füllstoffe aufweisen können. Die schütt- und/oder blasfähigen Dämmstoffpartikel können aus einem Mineralfasergranulat hergestellt werden, das bis zu 20 Masse-% Bindemittel aufweist. Das Bindemittel in den schütt- und/oder blasfähigen Dämmstoffpartikeln wird vorteilhaft mit einer Mikrowellenstrahlung und/oder mit durch die schütt- und/oder blasfähigen Dämmstoffpartikel geführter erwärmter Luft und/oder zumindest einem Wärmestrahler ausgehärtet. Alternativ können die schütt- und/oder blasfähigen Dämmstoffpartikel auch in die Kanäle eines erwämten, insbesondere eine Temperatur zwischen 100°C und 180°C, vorzugsweise zwischen 150°C und 180°C aufweisenden Formstein 80 eingebracht werden. Ergänzend können ferner aerosolartig zerstäubte Öle bzw. Öl-Emulsionen in die Kanäle 86 eingebracht, insbesondere eingeblasen und/oder eingesaugt werden. Die schütt- und/oder blasfähigen Dämmstoffpartikel weisen im in den Formstein 80 eingebrachten Zustand bevorzugt eine Dichte zwischen 45 kg/m³ und 120 kg/m³ auf. Ein Beispiel für eine entsprechende Einblas-Vorrichtung ist in Fig. 4 gezeigt.

Fig. 4 ist eine Schnittansicht und zeigt am Beispiel eines waagerecht angeordneten Formsteins 88 eine erfindungsgemäße Vorrichtung 90 zum Auffüllen von Kanälen 92 des Formsteins 88 mit beliebig geformten Querschnitten. Der Formstein 88 kann auf einer Auflage aufliegen oder mit Hilfe eines Greifers positioniert sein, was in Fig. 4 jedoch nicht gezeigt ist.

Die Vorrichtung 90 umfaßt zwei unabhängig voneinander bewegbare Köpfe, und zwar einen Materialzufuhrkopf 94 und einen Absaugkopf 96. Sowohl der Materialzuführkopf 94 als auch der Absaugkopf 96 können beispielsweise an nicht dargestellten Führungen befestigt und mittels ebenfalls nicht dargestellter elektrischer Antriebe oder wahlweise mittels pneumatisch oder hydraulisch angetriebenen Kolbenstangen bewegt und von beiden Seiten entsprechend an den Formstein 88 angedrückt werden. Alternativ können die Köpfe 94 und 96 auch durch frei im Raum verfahrbare Roboterarme bewegt werden.

Um die Befüllungszeiten abzukürzen, kann die Vorrichtung 90 auch mehrere Materialzuführköpfe 94 und entsprechend auch Absaugköpfe 96 aufweisen, die über eine gemeinsame Steuereinheit sowie über gemeinsame Führungselemente verfahren werden.

Die Zufuhr von Mineralwolle-Flocken erfolgt über den Materialzuführkopf 94. Dieser umfaßt eine geteilte Blechkonstruktion 98, die über einen Dichtungsring 100 zumindest auf die umlaufenden Außenstege 102 und 104 des Formsteins 88, wahlweise aber auch auf die Stege einer Kanalreihe oder eines einzelnen Kanals gedrückt wird, wobei die durch den Dichtungsring 100 erzeugte Dichtung das Entweichen von Förderluft und Mineralwolle-Flocken verhindern soll. Die Mineralwolle-Flocken werden mit Hilfe der üblicherweise verwendeten Fördermaschinen, deren jeweilige Leistung dem Verbrauch angepaßt wird, über eine oder mehrere Verteilerdüsen oder über mehrere Zufuhrleitungen 105 mitsamt entsprechenden Anschlüssen in Richtung des Pfeils 106 in den Hohlraum des Materialzuführkopfes 94 gefördert.

Um eine gleichmäßige Befüllung der einzelnen Kanalreihen, gegebenenfalls sogar der einzelnen Kanäle 92 zu erreichen, werden über den Stegen 108, 110, 112 des Formsteins 88 Leitbleche 114, 116, 118 angeordnet. Diese können das Muster mit den aufzufüllenden Kanälen vollständig abbilden. Die Höhe der Leitbleche 114, 116, 118 kann variiert werden, um eine gleichmäßige oder eben eine selektive Beaufschlagung der Öffnungen einzelner Kanalreihen oder einzelner Kanäle 92 zu erreichen.

Durch die Leitbleche 114, 116 und 118 wird auch der Stau von Mineralwolle-Flocken vor bzw. auf den Stegen 108, 110 und 112 verhindert, die nach Ende des Befüllungsvorganges abfallen und aufwendig beseitigt werden müssen.

Ergänzend zu der Darstellung in Fig. 4 können an dem Materialzuführkopf 94 ein oder mehrere Ausbauchungen in dem unteren Teil des Gehäuses vorgesehen werden, in denen die überschüssigen Mineralwolle-Flocken gesammelt werden. Zu Beginn des nächsten Füllvorganges können diese dann gegebenenfalls in die aufzufüllenden Kanäle geblasen werden.

Weiterhin kann am Materialzuführkopf 94 eine mit einem Filter versehene, nicht dargestellte Ausblasöffnung für die gesamte oder die überschüssige Förderluft vorgesehen werden. Die Leitung kann auch zu dem Ansaugstutzen des Ventilators der Fördermaschine zurückgeführt werden.

Um die Mineralwolle-Flocken zusätzlich mit Binde- oder sonstigen Zusatzmittels zu imprägnieren oder um weitere Stoffe oder Partikel hinzuzufügen, sind am Materialzuführkopf 94 vorliegend entlang des Umfangs verteilte Einspritzdüsen 120 vorgesehen. Sofern Flüssigkeiten eingebracht werden sollen, können sowohl Injektionsdüsen wie Hochdruckdüsen mit den entsprechenden Vorratsbehältern an der Fördereinrichtung installiert werden.

Als flüssige Bindemittel kommen beispielsweise anorganische Wassergläser, Kieselsol, organisch modifizierte Silane, Kunststoff-Dispersionen oder duroplastisch aushärtende, in Wasser lösliche Harzmischungen in Frage. Die Komponenten oder Mischungen können allein oder zusammen bzw. nacheinander den Mineralwolle-Flocken oder anderen blasfähigen Dämmstoffen hinzugefügt werden. Weiterhin können aerosolartige zerstäubte Öle bzw. Öl-Emulsionen eingeblasen werden.

Sowohl die flüssigen anorganischen als auch die organischen Bindemittel können Pigmente und/oder Füllstoffe enthalten.

Der Absaugkopf 96 der Vorrichtung 90 ist über die Absaugleitung 97 entweder an ein Pumpsystem, beispielsweise eine Vakuumpumpe, oder einen Ventilator angeschlossen, die sowohl einen ausreichend hohen Unterdruck als auch einen ausreichend hohen Förderluftstrom erzeugen. Auch der Absaugkopf 96 ist mit Hilfe entsprechender Dichtungen 122 gegenüber dem Formstein 88 abgedichtet, um das Ansaugen von sogenannter Falschluft ebenso wie den Austritt von Fasern sicher zu verhindern.

Unmittelbar hinter der Dichtung ist ein Sieb oder eine Membran 124 vorgesehen, das bzw. die die Mineralwolle-Flocken oder die darin enthaltenen nicht faserigen Partikel abfängt. Durch die Belegung mit den Mineralwolle-Flocken baut sich auf dem Sieb 124 schnell ein Filter auf, der selbst hochwirksam ist.

Der Absaugkopf 96 wird mit Hilfe von Leitblechen 126 oder mit Hilfe von auf die Stegbreiten des Formsteins 88 abgestimmte Einbauten unterteilt. Auf diese Weise wird ähnlich wie mit den Leitblechen 114, 116 und 118 eine gleichmäßige Beaufschlagung bzw. Befüllung der Kanäle 92 des Formsteins 88 bewirkt.

Wahlweise kann das Sieb 124 derart weit entlang der Leitbleche 126 in den Absaugkopf 96 zurückgesetzt werden, daß nach einem jeden Füllvorgang immer ausreichend Restmaterial verbleibt, so daß von vornherein ein ausreichend hoher Filterwiderstand vorhanden ist.

Der Unterdruck- und/oder der Abluftstrom können variiert werden. Durch den individuellen Anschluß einzelner Kanäle 92 oder von Kanalreihen an das Abluftsystem kann die Befüllung auch unterschiedlicher Kanäle 92 sowohl hinsichtlich des Zeitaufwandes wie auch der Rohdichte der Mineralwolle-Flocken ähnlich vergleichmäßigt oder variiert werden.

Die Rohdichte der eingeblasenen bzw. eingesaugten Mineralwolle-Flocken variiert in Abhängigkeit von der ursprünglichen Flockengröße und den Kanalgeometrien zwischen ca. 45 kg/m³ bis 120 kg/m³. Gerade bei den hochverdichteten Mineralwolle-Flocken kommt es nach dem Abheben der Köpfe 94 und 96 noch zu einer leichten Expansion, so daß der Dämmstoff aus den Kanälen 92 des Formsteins 88 herausquellen kann. Durch ein leichtes Überbürsten kann das überstehende Material schließlich entfernt werden.

Um einen sicheren Halt in den Kanälen 92 zu gewährleisten, können den Mineralwolle-Flocken Bindemittel hinzugefügt werden oder auch nachträglich auf die offenen Stirnflächen des Formsteins 88 aufgespritzt werden. Diese Bindemittel trocknen entweder atmosphärisch oder werden vor allem in den oberflächennahen Zonen dadurch verfestigt, daß der Formstein 88 an flächig wirkenden Heizstrahlern vorbeigefügt wird. Alternativ sind natürlich auch andere Trocknungsverfahren denkbar. Die zusätzliche Imprägnierung mit Öl soll die häufig geforderte Wasserabweisung der Mineralwolle-Flocken erhöhen oder nach Zugabe von Bindemitteln wieder auf den alten Stand bringen.

Anstelle von Mineralwolle-Flocken können natürlich auch andere blasfähige Dämmstoff-Partikel in die Kanäle 92 des Formsteins 88 eingebracht werden, wie beispielsweise Zellulose-Fasern, Blähglas, Bims, Polystyrol-Kugeln oder dergleichen. Auch diese blasfähigen Dämmstoff-Partikel können mit Bindemitteln imprägniert und untereinander sowie mit den Innenwänden der Kanäle 92 des Formsteins 88 verbunden werden. Zumeist reicht schon der formschlüssige Verbund mit den Lochinnenwänden aus, um ein Herausfallen nicht allzu schwerer Massen zu verhindern.

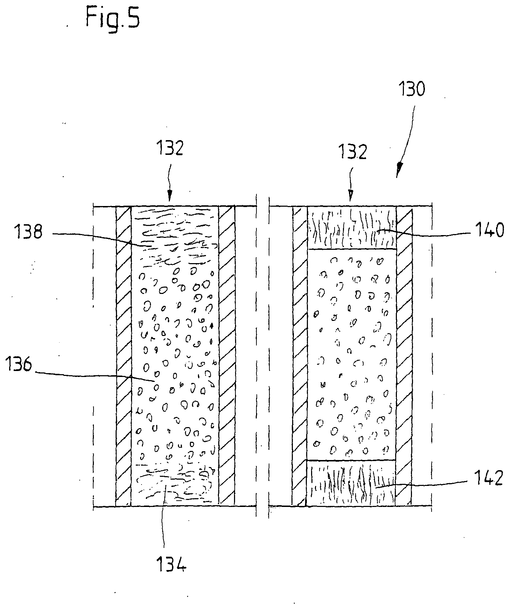

Fig. 5 zeige eine Querschnittansicht einer weiteren Ausführungsform eines Formsteins 130. Die Kanäle 132 des Formsteins 130 werden mit Dämmstoff gefüllt, indem zunächst Mineralwolle-Flocken eingeblasen werden, die einen ca. 20 mm bis 50 mm hohen Pfropfen 134 bilden, der durch Bindemittel fixiert wird. Anschließend werden ungebundene lose Partikel 136 eingefüllt, wobei den letztendlichen Abschluß wiederum ein Pfropfen 138 aus gebundenen Mineralwolle-Flocken bildet, was auf der linken Seite in Fig. 5 dargestellt ist.

Alternativ können die einen Kanal 132 verschließenden Pfropfen beispielsweise auch aus Formkörpern gebildet sein, wie beispielsweise Steinwolle-Formkörper mit Rohdichten > 40 kg/m³, wie es in Fig. 5 durch die mit den Bezugsziffer 140 und 142 bezeichneten Pfropfen gezeigt ist.

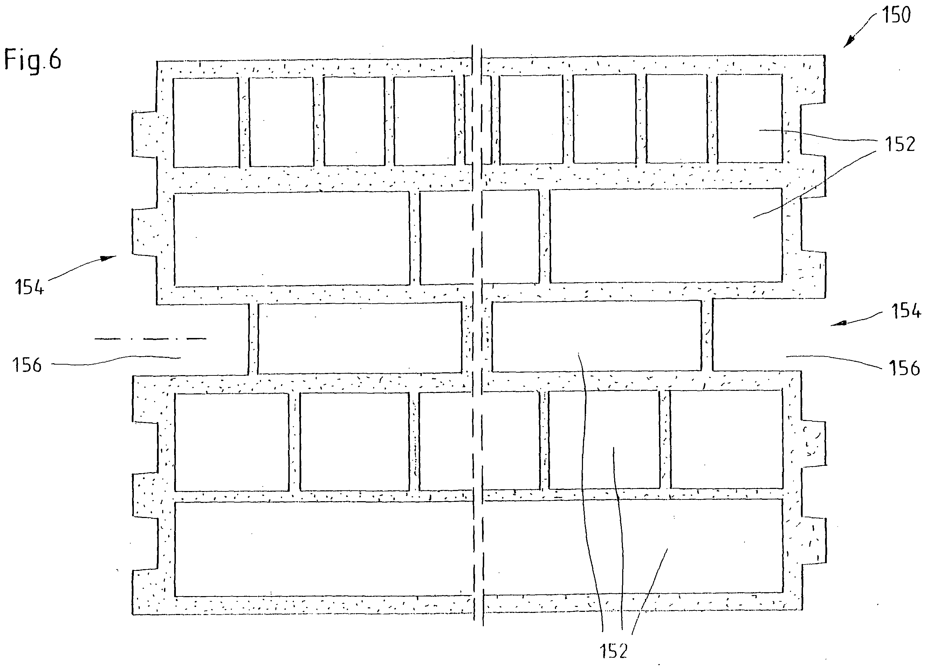

Fig. 6 zeigt eine weitere Ausgestaltungsform eines Formsteins 150, der ein beliebiges, unter Berücksichtigung von Aspekten des Wärme- und/oder Schallschutzes konzipiertes Kanalbild aufweist. Die Kanäle 152 des Formsteins 150 können gegebenenfalls mit Dämmstoffen gefüllt sein. Die Seitenflächen 154 des Formsteins 150 sind gezahnt ausgebildet, wodurch ein genaues Positionieren benachbarter Formsteine 150 relativ zueinander gewährleistet wird. In den Seitenflächen 154 sind jeweils sich über die Höhe des Formsteins 150 erstreckende Nuten 156 ausgebildet, in die bevorzugt nach dem Setzen des Formsteins 150 ein nicht dargestellter Dämmstoff-Formkörper mit beispielsweise rechteckigem Querschnitt einschiebbar ist. Der Dämmstoff-Formkörper kann bereits werkseitig eingeklemmt werden, wobei jedoch die Gefahr besteht, daß er bei der Handhabung des Formsteins 150 beschädigt wird und dann nicht mehr in die entsprechende Nut 156 des benachbart anzuordnenden Formsteins 150 paßt. Dieser Dämmstoff-Formkörper soll Wärme- wie auch Schallbrückenwirkung der Stoßfugen abmindern. Die Nuten 156 können jeweils in der Mitte der verzahnten Seitenfläche 154 des Formsteins 150 angeordnet werden, um eine symmetrische Verzahnung zu ermöglichen. Es ist jedoch auch möglich, daß die Nuten 154 außermittig angeordnet werden. Die Tiefe der Nuten 156 kann auf beiden Seiten gleich groß oder unterschiedlich sein. Die Dicke des bevorzugt aus Mineralwolle bestehenden Dämmstoff-Formkörpers beträgt ca. 10 mm bis ca. 70 mm, bevorzugt ca. 20 mm bis 40 mm. Der Querschnitt ist gewöhnlich rechteckig, das Breiten-Dicken-Verhältnis zumeist > 3:1. Um eine ausreichende Steifigkeit zu erreichen, sollte die Rohdichte > 30 kg/m³ übersteigen. Der Dämmstoff-Formkörper kann mit wärmereflektierenden Schichten oder Glasfaser-Wirrvliesen ein- oder beidseitig kaschiert sein. Desweiteren kann er allein oder in Ergänzung zu den erwähnten Kaschierungen eine lufthemmende Beschichtung aufweisen. Diese lufthemmende Beschichtung ist bevorzugt nach außen gerichtet.

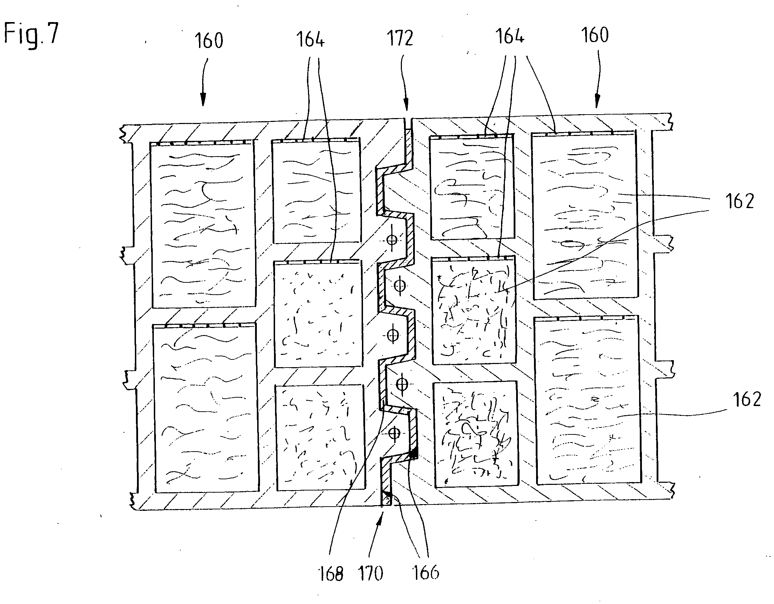

Fig. 7 zeigt eine Querschnittansicht einer weiteren Ausführungsform von zwei benachbart angeordneten Formsteinen 160. Die Formsteine 160 weisen ebenfalls mit Formkörpern 160 aus Dämmstoff gefüllte Kanäle 162 sowie mit einer Verzahnung versehene Stirnseiten 166 auf. Zwischen den verzahnten Stirnseiten 166 der benachbart angeordneten Formsteine 160 ist ein bevorzugt aus Steinwolle ausgebildeter Formkörper vorgesehen, der eine den Zahnungen der Stirnseiten 166 der benachbart angeordneten Formsteine 160 entsprechende Form aufweist. Die Höhe des Formkörpers 168 entspricht der Höhe der Formsteine 160. Die Dicke des Formkörpers 168 beträgt ca. 3 mm bis 15 mm, bevorzugt ca. 3 mm bis 5 mm. Die Rohdichte liegt in einem Bereich von bevorzugt zwischen 50 kg/m³ und 120 kg/m³. Der Formkörper 168 kann bündig mit den Seitenflächen der benachbart angeordneten Formsteine 160 abschließen, siehe Bezugsziffer 170. Diese Ausführung ist angebracht, wenn die Außenfläche der aus diesen Formsteinen 160 hergestellten Außenwand beispielsweise mit einer weiteren Dämmschicht oder nur mit einer hinterlüfteten Bekleidung abgedeckt wird.

Um die Putzhaftung im Bereich der Stoßfugen nicht zu verringern bzw. einer Rißgefahr vorzubeugen, kann der Formkörper 168 alternativ auf der zumeist verputzten Innenwandfläche leicht zurückspringen, siehe Bezugsziffer 172.

Eine oder beide Seitenkanten des Formkörpers 168 können mit haftvermittelnden Grundierungen versehen sein. Durch diese haftvermittelnden Grundierungen bzw. Schichten soll ein kraftschlüssiger Verbund mit den Putzschichten erreicht werden.

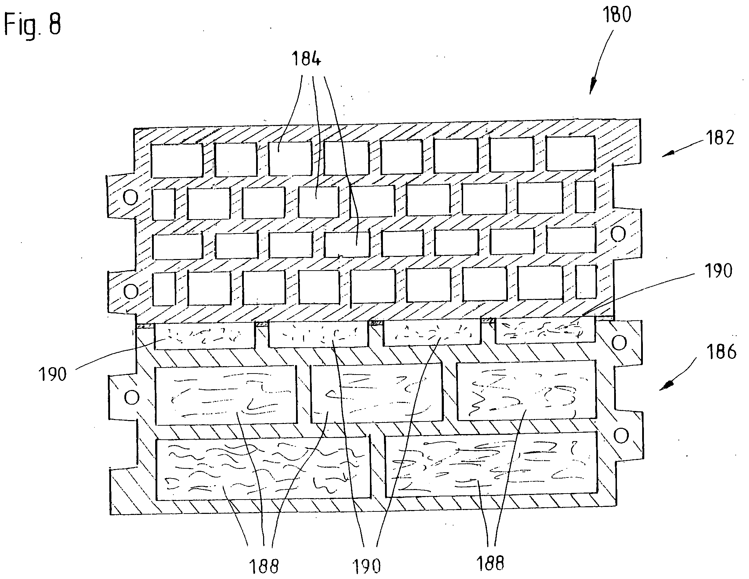

Fig. 8 zeigt eine Querschnittansicht einer weiteren Ausführungsform eines Formsteins 180 mit zweigeteiltem Aufbau. Der erste Teil 182 ist mit einer hohen Scherbenrohdichte und kleineren Kanälen 184 ausgebildet, während der zweite Teil 186, der vorzugsweise nach außen gerichtet ist, eine geringere Scherbenrohdichte und entsprechend eine geringere Druckfestigkeit, aber einen höheren Wärmedurchlaßwiderstand aufweist. Der Dämmstoffformkörper 188 und Dämmstoff-Flocken 190 werden bevorzugt in die entsprechenden Kanäle des zweiten Teils 186 eingebracht.

Die beiden Teile 182 und 186 des Formsteins 190 werden wie üblich jeweils in einer separaten Strangpresse hergestellt und durch Aufbringen einer Engobe auf die Klebeflächen zusammengefügt, getrocknet und gebrannt.

Um das Zusammenfügen zu erleichtern, können in der Wandung des hinteren Teils flache Nuten ausgeprägt sein, in welche die Stege des einzuklebenden Teils eingeführt werden, was vorliegend jedoch nicht gezeigt ist.

Da bei großen Unterschieden in der Scherbendichte und Kanalgeometrie die Brenngeschwindigkeit stark abgesenkt werden muß, um Verformungen und Rißbildungen zu vermeiden, kann es sinnvoll sein, beide Hälften 182 und 186 des Formsteins 180 erst nach dem Trocknen zusammenzukleben und danach zu brennen.

Um ein Verrutschen beider Teile 182 und 186 des Formsteins 180 nach der Verklebung zu vermeiden, können auch nachträglich flache Nuten in das erste Teil 182 des Formsteins eingefräst werden, in welche dann die entsprechenden Stege des anderen Teils 186 eingreifen.

Als Klebemittel dienen einmal Mischungen aus flußmittelreichen Tonmineralien mit Fritten aus niedrigschmelzenden Gläsern ähnlich wie Glaswolle-Gläser mit Schmelzbereichen < 700°C, Kunststoff-Dispersionen, Stellmittel und andere. Die gegebenenfalls zugesetzten Kunststoff-Dispersionen sollen bei glatten Verbindungsflächen einem Verrutschen entgegenwirken. Die keramische Verbindung der beiden Teile erfolgt durch das Aufschmelzen bzw. Sintern der flußmittelreichen Klebemittel. Hierzu werden bevorzugt entsprechend geformte Brenner durch die Kanäle und entlang der Verbindungsstellen geführt. Auf diese Weise werden nur die unmittelbar zu verbindenden Flächen erhitzt und der Aufwand für das alternative Erhitzen des gesamten Formsteins vermieden.

Sofern der hintere Teil des Formsteins 182 in sich ausreichend tragfähig ist, das heißt eine entsprechende Breite und damit Lagesicherheit bei entsprechender Druckfestigkeit aufweist, können beide Teile 182 und 186 des Formsteins 180 beispielsweise mit hochfesten Kunstharzen verklebt werden. Die Mindestbreite des hinteren Teils 182 des Formsteins 180 beträgt bevorzugt ³ 17,5 cm. Hierzu werden die Verbindungsflächen mit geeigneten Primern behandelt, das heißt ausreichend tiefgrundiert. Diese Vorbehandlung ist grundsätzlich bekannt. Sofern Mehrkomponenten-Harze mit ausreichender Reaktionsgeschwindigkeit und Wärmefreisetzung verwendet werden, erübrigt sich eine Nachhärtung. Prophylaktisch werden aber die Verbindungsflächen angewärmt und gegebenenfalls auch nach dem Auftrag des Klebemittels nachbehandelt, um beispielsweise bei tieferen Temperaturen in den Fertigungshallen eine gleichbleibend feste Verbindung zu erhalten.

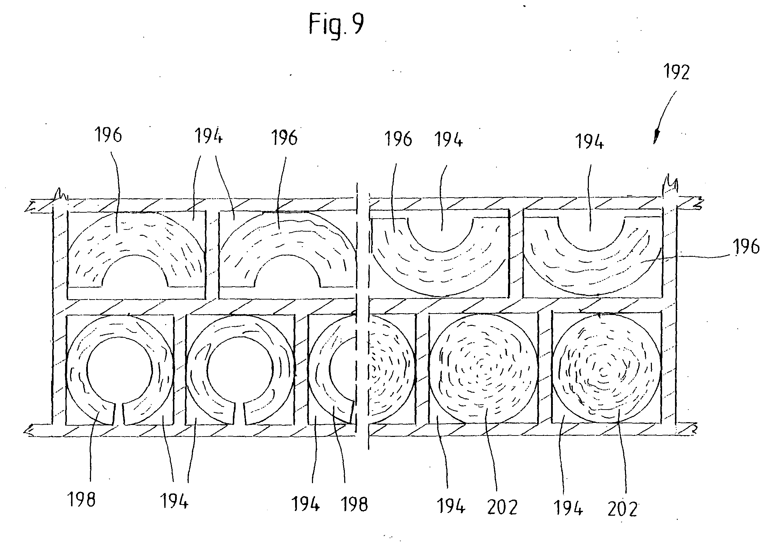

Fig. 9 zeigt eine Querschnittansicht zu einer weiteren Ausführungsform eines Formsteins 192, dessen Kanäle 194 zumindest teilweise mit Segmenten 196 und 198 von Mineralwolle-Rohrschalen gefüllt sind. Dabei werden Rohrschalen mit einer ausreichend hohen Steifigkeit in axialer Richtung bevorzugt. Die Segmente 196 weisen der Form der Kanäle 194 entsprechend abgeschrägte Längs-Seitenflächen auf. die Rohrschalen-Segmente lassen sich entlang der Sehne spannen und auf diese Weise leicht in die Kanäle 194 einführen. Die geringen Dicken der Seitenflächen führen nicht zu hohen Reibungskräften und einem zu hohen Abrieb, so daß ein fester Sitz gewährleistet ist.

Um den Widerstand der Rohrschalen-Segmente gegen Verformungen zu reduzieren, können diese in Längsrichtung oder hohem lokalen Druck gespurt bzw. gewalkt werden, wobei die Dämmstoff-Struktur deutlich geschwächt wird, wodurch die Bogenspannung und die Bruchgefahr der Rohrschalen-Segmente reduziert wird. Durch mehrere parallel angelegte Spuren kann eine polygonartige Verformung der Rohrschalen bzw. ihrer Segmente 196 und 198 erreicht werden.

Die Rohrschalen-Segmente 196, 198 können in der Höhe geteilt und von beiden Seiten in die Kanäle 194 eingebracht werden.

Die Rohrschalen-Segmente 194 und 196 dienen in erster Linie der Luftschall-Dämpfung. Sie sollten deshalb in beliebigen Winkeln zu den Außenflächen angeordnet werden, so daß sie in verschiedene Richtungen weisen.

Rohrschalen-Segmente, halbe oder ganze Schalen, eignen sich insbesondere für das Auffüllen von runden oder elliptischen Löchern. Sie können mit perforierten Metallfolien und/oder mit luftdurchlässigen Vliesen kaschiert oder mit dichtenden Farben, Putzen oder dergleichen beschichtet sein.

Anstelle von Rohrschalen-Segmenten können auch zylindrische Formkörper 202 verwendet werden.

Es sollte klar sein, daß die zuvor beschriebenen Ausführungsbeispiele nicht einschränkend sind. Vielmehr sind Modifikationen und/oder Änderungen möglich, ohne den Schutzbereich der vorliegenden Erfindung zu verlassen, der durch die beiliegenden Ansprüche definiert ist.

### Bezugszeichenliste

- 10: Vorrichtung
- 12: Formkörper
- 14: Kanal
- 16: Formstein
- 18: Greifer
- 20: Lochplatte
- 22: Plattform
- 24: Stützkonstruktion
- 26: Hülse
- 28: Platte
- 30: Kolbenstange
- 32: Druckzylinder
- 33: Kopf
- 34: Vorsprünge
- 36: Gestänge
- 38: Gestänge
- 40: Führungshülse
- 42: Greiferschale
- 44: Greiferschale
- 46: Feder
- 50: Vorrichtung
- 52: Plattform
- 54: Stützkonstruktion
- 56: Hülse
- 58: Kolbenstange
- 60: Kolbenstange
- 62: Gestänge
- 64: Gestänge
- 66: Greiferschale
- 68: Greiferschale
- 70: Platte
- 80: Formstein
- 82: Kanäle
- 84: Kanäle
- 86: Kanäle
- 88: Formstein
- 90: Vorrichtung
- 92: Kanäle
- 94: Materialzuführkopf
- 96: Absaugkopf
- 97: Absaugleitung
- 98: Blechkonstruktion
- 100: Dichtungsring
- 102: Außenstege
- 104: Außenstege
- 105: Zufuhrleitung
- 106: Pfeil
- 108: Steg
- 110: Steg
- 112: Steg
- 114: Leitblech
- 116: Leitblech
- 118: Leitblech
- 120: Einspritzdüse
- 122: Dichtungen
- 124: Sieb
- 126: Leitbleche
- 130: Formstein
- 132: Kanäle
- 134: Pfropfen
- 136: lose Partikel
- 138: Pfropfen
- 140: Pfropfen
- 142: Pfropfen
- 150: Formstein
- 152: Kanäle
- 154: Seitenflächen
- 156: Nuten
- 160: Formsteine
- 162: Kanäle
- 164: Reflektionsschichten
- 166: Stirnseiten
- 168: Formkörper
- 170: Bezugsziffer
- 172: Bezugsziffer
- 180: Formstein
- 182: Teil
- 184: Kanäle
- 186: Teil
- 188: Dämmstoff-Formkörper
- 190: Dämmstoff-Flocken
- 192: Formstein
- 194: Kanäle
- 196: Segmente
- 198: Segmente
- 202: Formkörper

## Patentansprüche

1. Verfahren zur Herstellung eines Formsteins (80; 88; 130; 150; 160; 180; 192), beispielsweise eines Mauersteins, insbesondere eines Ziegels mit einem vorzugsweise im wesentlichen quaderförmigen Körper, der zwei im wesentlichen parallel und im Abstand zueinander ausgerichtete große Oberflächen und im wesentlichen hierzu rechtwinklig verlaufende Seitenflächen sowie im wesentlichen parallel zu den Seitenflächen und im wesentlichen rechtwinklig zu den großen Oberflächen verlaufende Kanäle (82, 84, 86; 92; 132; 152; 162; 184; 194) aufweist, in die zumindest teilweise eine Füllung aus einem Dämmstoffmaterial eingebracht wird, **dadurch gekennzeichnet, dass** schütt- und/oder blasfähige Dämmstoffpartikel aus Mineralfasern mit Bindemittel in zumindest einen Teil der Kanäle (82, 84, 86; 92; 132; 152; 162; 184; 194) in horizontaler Förderrichtung eingeblasen und/oder eingesaugt werden und wobei der Kanal (82, 84, 86; 92; 132; 152; 162; 184; 194) im Formstein (80; 88; 130; 150; 160; 180; 192) ausgangsseitig mit einer luftdurchlässigen Membran (124) verschlossen ausgebildet ist.

2. Verfahren nach Anspruch 1, **dadurch gekennzeichnet, dass** die schüttfähigen Mineralfasern anorganischen Wassergläsern, Kieselsol, organisch modifizierten Silanen, Kunststoffdispersionen und/oder duroplastisch aushärtenden, in Wasser löslichen Harzen, beispielsweise Phenolharz und/oder Thermoplasten eingebracht werden, wobei die Bindemittel ergänzend Pigmente und/oder Füllstoffe aufweisen können.

3. Verfahren nach Anspruch 1, **dadurch gekennzeichnet, dass** die schüttfähigen Dämmstoffpartikel aus einem Mineralfasergranulat hergestellt werden, das bis zu 20 Masse-% Bindemittel aufweist.

4. Verfahren nach Anspruch 1, **dadurch gekennzeichnet, dass** die schüttfähigen Dämmstoffpartikel beim Einbringen in die entsprechenden Kanäle (82, 84, 86; 92; 132; 152; 162; 184; 194) mit bis zu 20 Masse-% Bindemitteln vermischt werden.

5. Verfahren nach Anspruch 1, 3 und/oder 4, **dadurch gekennzeichnet, dass** das Bindemittel in den schüttfähigen Dämmstoffpartikel mit einer Mikrowellenstrahlung und/oder mit durch die schüttfähigen Dämmstoffpartikel geführter erwärmter Luft und/oder zumindest einem Wärmestrahler ausgehärtet wird.

6. Verfahren nach Anspruch 1, **dadurch gekennzeichnet, dass** die schütt- und/oder blasfähigen Dämmstoffpartikel in die Kanäle (82, 84, 86; 92; 132; 152; 162; 184; 194) eines erwärmten, insbesondere eine Temperatur zwischen 100°C und 180°C, vorzugsweise zwischen 150°C und 180°C aufweisenden Formsteins (80; 88; 130; 150; 160; 180; 192) eingebracht werden.

7. Verfahren nach Anspruch 1 und/oder 4, **dadurch gekennzeichnet, dass** die schüttfähigen Dämmstoffpartikel und die Bindemittel zeitlich nacheinander oder gleichzeitig in die Kanäle (82, 84, 86; 92; 132; 152; 162; 184; 194) eingebracht werden.

8. Verfahren nach Anspruch 1, **dadurch gekennzeichnet, dass** ergänzend aerosolartig zerstäubte Öle bzw. Öl-Emulsionen in die Kanäle (82, 84, 86; 92; 132; 152; 162; 184; 194) eingebracht, insbesondere eingesaugt werden.

9. Verfahren nach Anspruch 1, **dadurch gekennzeichnet, dass** ein für das saugende Einbringen der schüttfähigen Dämmstoffpartikel, insbesondere der Mineralfasern vorgesehener Luftstrom in Abhängigkeit eines gewünschten Füllungsgrades der Kanäle (82, 84, 86; 92; 132; 152; 162; 184; 194) und/oder der Dichte der in den Kanälen (82, 84, 86; 92; 132; 152; 162; 184; 194) angeordneten Dämmstoffpartikel eingestellt wird.

10. Verfahren nach Anspruch 1, **dadurch gekennzeichnet, dass** die schüttfähigen Dämmstoffpartikel mit einer Dichte zwischen 45 und 120 kg/m3 in die Kanäle (82, 84, 86; 92; 132; 152; 162; 184; 194) eingebracht werden.

11. Verfahren nach Anspruch 1, **dadurch gekennzeichnet, dass** die schüttfähigen Dämmstoffpartikel nach dem Einbringen in die Kanäle (82, 84, 86; 92; 132; 152; 162; 184; 194) im Bereich der großen Oberflächen des Formsteins (80; 88; 130; 150; 160; 180; 192) fixiert werden.

12. Verfahren nach Anspruch 1, **dadurch gekennzeichnet, dass** die schüttfähigen Dämmstoffpartikel nach dem Einbringen in die Kanäle (82, 84, 86; 92; 132; 152; 162; 184; 194) im Bereich der großen Oberflächen des Formsteins (80; 88; 130; 150; 160; 180; 192) vorzugsweise mit einem Öl imprägniert werden.

13. Vorrichtung (90) zur Durchführung des Verfahrens nach einem der Ansprüche 1 bis 12, mit zumindest einer Auflagefläche, die der Auflage zumindest des mit einer Füllung zu versehenden und große Oberflächen aufweisenden Formsteins (80; 88; 130; 150; 160; 180; 192) mit zumindest einem rechtwinklig zu den großen Oberflächen verlaufenden Kanal (82, 84, 86; 92; 132; 152; 162; 184; 194) dient und mit einer Fördereinrichtung, die schütt- und/oder blasfähige Dämmstoffpartikel aus Mineralfasern mit einem den Kanal (82, 84, 86; 92; 132; 152; 162; 184; 194) durchströmende Luftstrom fördert, **dadurch gekennzeichnet, dass** die Förderrichtung der schütt- und/oder blasfähige Dämmstoffpartikel im Wesentlichen horizontal ausgerichtet ist und wobei eine den Kanal (82, 84, 86; 92; 132; 152; 162; 184; 194) im Formstein (80; 88; 130; 150; 160; 180; 192) ausgangsseitig verschließende luftdurchlässige Membran (124) vorgesehen ist.

14. Vorrichtung (90) nach Anspruch 13, **dadurch gekennzeichnet, dass** die Membran (124) als Folie ausgebildet und vorzugsweise lösbar mit dem Formstein (80; 88; 130; 150; 160; 180; 192) verbindbar ist.

15. Vorrichtung (90) nach Anspruch 13, **dadurch gekennzeichnet, dass** ein Gehäuse an seinem dem Formstein (80; 88; 130; 150; 160; 180; 192) zugewandten Eingangs- und/oder Ausgangsbereich eine Leitvorrichtung, beispielsweise in Form von Leitblechen (114, 116, 118; 126) aufweist.

16. Vorrichtung (90) nach Anspruch 15, **dadurch gekennzeichnet, dass** das Gehäuse eine Einspritzvorrichtung für die Zugabe von Binde- und/oder imprägniermitteln in den Förderstrom aufweist.

## Claims

1. A method for manufacturing a moulded brick (80; 88; 130; 150; 160; 180; 192), for example a building brick, in particular a clay brick, having a preferably essentially cuboid body which comprises two large surfaces which are essentially parallel to each other and aligned at a distance from each other and side surfaces which extend essentially perpendicularly to these ones as well as channels (82, 84, 86; 92, 132; 152; 162; 184; 194) which extend essentially in parallel to the side surfaces and essentially perpendicularly to the large surfaces, into which channels a filling of insulating material will be at least partly introduced, **characterized in that** pourable and/or blowable insulating material particles made of mineral fibers, together with a binding agent, will be blown and/or sucked into at least a part of the channels (82, 84, 86; 92, 132; 152; 162; 184; 194) in a horizontal conveying direction, and wherein the channel (82, 84, 86; 92, 132; 152; 162; 184; 194) in the moulded brick (80; 88; 130; 150; 160; 180; 192) is closed by an air-permeable membrane (124) on the output side.

2. A method according to claim 1, **characterized in that** the pourable mineral fibers will be introduced into inorganic soluble glasses, silica sol, organically modified silanes, plastic dispersions and/or in water soluble resins which harden by thermosetting, for example phenolic resin and/or thermoplastics, wherein the binding agents can complementarily comprise pigments and/or fillers.

3. A method according to claim 1, **characterized in that** the pourable insulating material particles are manufactured from a mineral fiber granulate which comprises up to 20% by mass a binding agent.

4. A method according to claim 1, **characterized in that** the pourable insulating material particles will be mixed with up to 20% by mass binding agents when they are introduced into the corresponding channels (82, 84, 86; 92, 132; 152; 162; 184; 194).

5. A method according to claim 1, 3 and/or 4, **characterized in that** the binding agent in the pourable insulating material particles will be hardened by means of micro wave radiation and/or heated air which is guided through the pourable insulating material particles and/or at least one radiant heater.

6. A method according to claim 1, **characterized in that** the pourable and/or blowable insulating material particles will be introduced into the channels (82, 84, 86; 92, 132; 152; 162; 184; 194) of a moulded brick (80; 88; 130; 150; 160; 180; 192) which has been heated up and in particular comprises a temperature comprised between 100°C and 180°C, preferably between 150°C and 180°C.

7. A method according to claim 1 and/or 4, **characterized in that** the pourable insulating material particles and the binding agents will be introduced into the channels (82, 84, 86; 92, 132; 152; 162; 184; 194) one after another or at the same time.

8. A method according to claim 1, **characterized in that** oils or oil emulsions sprayed like aerosols will be complementarily introduced, in particular sucked into the channels (82, 84, 86; 92, 132; 152; 162; 184; 194).

9. A method according to claim 1, **characterized in that** an air stream provided for the sucking introduction of the pourable insulating material particles, in particular the mineral fibers, will be set in dependence on a desired filling degree of the channels (82, 84, 86; 92, 132; 152; 162; 184; 194) and/or the density of the insulating material particles arranged in the channels (82, 84, 86; 92, 132; 152; 162; 184; 194).

10. A method according to claim 1, **characterized in that** the pourable insulating material particles will be introduced with a density comprised between 45 and 120 kg/m³ into the channels (82, 84, 88; 92, 132; 152; 162; 184; 194).

11. A method according to claim 1, **characterized in that** the pourable insulating material particles will be fixed in the area of the large surfaces of the moulded brick (80; 88; 130; 150; 160; 180; 192) after having been introduced into the channels (82, 84, 86; 92, 132; 152; 162; 184; 194).

12. A method according to claim 1, **characterized in that** the pourable insulating material particles will be preferably impregnated with an oil in the area of the large surfaces of the moulded brick (80; 88; 130; 150; 160; 180; 192) after having been introduced into the channels (82, 84, 86; 92, 132; 152; 162; 184; 194).

13. A device (90) for carrying out the method according to one of the claims 1 through 12, comprising at least one supporting surface which serves for the support of at least the moulded brick (80; 88; 130; 150; 160; 180; 192) to be provided with a filling and comprising large surfaces as well as at least one channel (82, 84, 86; 92, 132; 152; 162; 184; 194) which extends perpendicularly to the large surfaces, and comprising a conveying device which conveys pourable and/or blowable insulating material particles made of mineral fibers by means of an air stream flowing through the channel (82, 84, 86; 92, 132; 152; 162; 184; 194), **characterized in that** the conveying direction of the pourable and/or blowable insulating material particles is essentially oriented horizontally and wherein an air-permeable membrane (124) is provided which closes the channel (82, 84, 86; 92, 132; 152; 162; 184; 194) in the moulded brick (80; 88; 130; 150; 160; 180; 192) on the output side.

14. A device (90) according to claim 13, **characterized in that** the membrane (124) is designed as a foil and can be preferably connected to the moulded brick (80; 88; 130; 150; 160; 180; 192) in a detachable manner.

15. A device (90) according to claim 13, **characterized in that** a housing comprises a guiding device, for example in the form of baffles (124, 116, 118; 126), at its entry and/or exit area facing the moulded brick (80; 88; 130; 150; 160;180;192).

16. A device (90) according to claim 15, **characterized in that** the housing comprises an injection device for the addition of binding and/or impregnating agents into the conveyance flow.

## Revendications

1. Procédé de fabrication d'une brique moulée (80 ; 88 ; 130 ; 150 ; 160 ; 180 ; 192), par exemple d'une brique de construction, notamment d'une brique d'argile, comprenant de préférence un corps essentiellement en forme de parallélépipède, qui comprend deux grandes surfaces, qui sont essentiellement parallèles l'une à l'autre et alignées à distance l'une de l'autre, et des surfaces latérales, qui s'étendent essentiellement de manière perpendiculaire à celles-ci, ainsi que des canaux (82, 84, 86 ; 92 ; 132 ; 152 ; 162; 184; 194), qui s'étendent essentiellement de manière parallèle aux surfaces latérales et essentiellement de manière perpendiculaire aux grandes surfaces, dans lesquels canaux est au moins partiellement introduit un remplissage d'un matériau isolant, **caractérisé en ce que** des particules de matériau isolant en fibres minérales pouvant être versées et/ou soufflées sont soufflées et/ou aspirées avec des agents liants dans au moins une partie des canaux (82, 84, 86; 92; 132; 152 ; 162; 184 ; 194) dans un sens de transport horizontal, et le canal (82, 84, 86 ; 92 ; 132 ; 152 ; 162 ; 184 ; 194) dans la brique moulée (80 ; 88 ; 130 ; 150 ; 160 ; 180 ; 192) étant fermé par une membrane perméable à l'air (124) sur le côté de sortie.

2. Procédé selon la revendication 1, **caractérisé en ce que** les fibres minérales pouvant être versées sont introduites dans des verres solubles inorganiques, du sol de silice, des silanes organiquement modifiés, des dispersions de matière plastique et/ou des résines solubles dans l'eau et thermodurcissables, par exemple de la résine phénolique et/ou des thermoplastiques, les agents liants pouvant comprendre de manière complémentaire des pigments et/ou des matières de remplissage.

3. Procédé selon la revendication 1, **caractérisé en ce que** les particules de matériau isolant pouvant être versées sont fabriquées à partir d'un granulat de fibres minérales, qui comprend jusqu'à 20 % en masse d'agents liants.

4. Procédé selon la revendication 1, **caractérisé en ce que** les particules de matériau isolant pouvant être versées sont mélangées avec jusqu'à 20 % en masse d'agents liants quand elles sont introduites dans les canaux correspondants (82, 84, 86 ; 92 ; 132 ; 152 ; 162 ; 184 ; 194).

5. Procédé selon la revendication 1, 3, et/ou 4, **caractérisé en ce que** l'agent liant dans les particules de matériau isolant pouvant être versées est durci par moyen d'un rayonnement micro-ondes et/ou par moyen d'air chauffé, qui est guidé à travers les particules de matériau isolant pouvant être versées, et/ou par moyen d'au moins un radiateur thermique.

6. Procédé selon la revendication 1, **caractérisé en ce que** les particules de matériau isolant pouvant être versées et/ou soufflées sont introduites dans les canaux (82, 84, 86 ; 92 ; 132 ; 152 ; 162 ; 184 ; 194) d'une brique moulée (80 ; 88; 180 ; 150 ; 180 ; 180 ; 192) chauffée, qui comprend notamment une température comprise entre 100°C et 180°C, de préférence entre 150°C et 180°C.

7. Procédé selon la revendication 1 et/ou 4, **caractérisé en ce que** les particules de matériau isolant pouvant être versées et les agents liants sont introduits dans les canaux (82, 84, 86 ; 92 ; 132 ; 152 ; 162 ; 184 ; 194) successivement dans le temps ou simultanément.

8. Procédé selon la revendication 1, **caractérisé en ce que** des huiles ou des émulsions d'huile vaporisées comme des aérosols sont introduites, notamment aspirées de manière complémentaire dans les canaux (82, 84, 85 ; 92 ; 132 ; 152 ; 162 ; 184 ; 194).

9. Procédé selon la revendication 1, **caractérisé en ce qu'**un courant d'air prévu pour l'introduction par aspiration des particules de matériau isolant pouvant être versées, notamment des fibres minérales, est réglé en fonction d'un degré de remplissage désiré des canaux (82, 84, 86 ; 92 ; 182 ; 152 ; 162 ; 184 ; 194) et/ou de la densité des particules de matériau isolant disposées dans les canaux (82, 84, 86 ; 92 ; 132 ; 152 ; 102 ; 184 ; 194).

10. Procédé selon la revendication 1, **caractérisé en ce que** les particules de matériau isolant pouvant être versées sont introduites avec une densité comprise entre 45 et 120 kg/m³ dans les canaux (82, 84, 86 ; 92 ; 132 ; 152 ; 162 ; 184; 194).

11. Procédé selon la revendication 1, **caractérisé en ce que** les particules de matériau isolant pouvant être versées sont fixées dans la zone des grandes surfaces de la brique moulée (80 ; 88 ; 130 ; 150 ; 160 ; 180 ; 192) après avoir été introduites dans les canaux (82, 84, 86 ; 92 ; 132 ; 152 ; 162 ; 184 ; 194).

12. Procédé selon la revendication 1, **caractérisé en ce que** les particules de matériau isolant pouvant être versées sont imprégnées de préférence avec une huile dans la zone des grandes surfaces de la brique moulée (80 ; 88 ; 130 ; 150 ; 160 ; 180 ; 192) après avoir été introduites dans les canaux (82, 84, 86 ; 92 ; 132 ; 152 ; 162 ; 184 ; 194).

13. Dispositif (90) pour exécuter le procédé selon l'une des revendications 1 à 12, comprenant au moins une surface d'appui, qui sert d'appui à au moins la brique moulée (80 ; 88 ; 130 ; 150 ; 180 ; 980 ; 192), qui est à munir d'un remplissage et qui comprend des grandes surfaces ainsi qu'au moins un canal (82, 84, 86 ; 92 ; 132 ; 152 ; 162 ; 184 ; 194), qui s'étend perpendiculairement aux grandes surfaces, et comprenant un dispositif de transport, qui transporte des particules de matériau isolant en fibres minérales pouvant être versées et/ou soufflées par moyen d'un courant d'air passant à travers le canal (82, 84, 86; 92; 132; 152; 152 ; 184; 194), **caractérisé en ce que** le sens de transport des particules de matériau isolant pouvant être versées et/ou soufflées est essentiellement orienté horizontalement et dans lequel une membrane (124) perméable à l'air, qui ferme le canal (82, 84, 86 ; 92 ; 132 ; 152 ; 162 ; 184 ; 194) dans la brique moulée (80 ; 88 ; 130 ; 150 ; 160 ; 180 ; 192) sur le côté de sortie, est prévue.

14. Dispositif (90) selon la revendication 13, **caractérisé en ce que** la membrane (124) est conçue comme un film et peut être reliée à la brique moulée (80 ; 88 ; 130 ; 150 ; 150 ; 180 ; 192) de manière amovible.

15. Dispositif (90) selon la revendication 13, **caractérisé en ce qu'**un boitier comprend un dispositif de guidage, par exemple sous forme de déflecteurs (114, 116, 118 ; 126), dans sa zone d'entrée et/ou sa zone de sortie, qui fait face à la brique moulée (80 ; 88 ; 130 ; 150 ; 160 ; 180 ; 192).

16. Dispositif (90) selon la revendication 15, **caractérisé en ce que** le boitier comprend un dispositif d'injection destiné à l'addition des agents liants et/ou des agents d'imprégnation dans le courant de transport.
